# EUROPEAN PATENT APPLICATION

(11) **EP 4 832 076 A1**
(43) Date of publication of application: **28.10.2026**
(21) Application number: 24907652.2
(22) Date of filing: 24.07.2024
(51) Int. Cl.: H01M 4/36, H01M 4/58, H01M 4/136, H01M 4/587, H01M 4/62, H01M 10/052

(54) **COMPOSITE POSITIVE ELECTRODE ACTIVE MATERIAL, POSITIVE ELECTRODE COMPRISING SAME, AND ALL-SOLID-STATE SECONDARY BATTERY**

(30) Priority: 22.12.2023 KR 20230190355
(71) Applicant: SAMSUNG SDI CO., LTD., Yongin-si, Gyeonggi-do 17084 (KR)
(72) Inventor: LEE, Ji Eun, Yongin-Si Gyeonggi-do 17084 (KR); SON, In Hyuk, Yongin-Si Gyeonggi-do 17084 (KR); JO, Sung Nim, Yongin-Si Gyeonggi-do 17084 (KR); SHIM, Kyu Eun, Yongin-Si Gyeonggi-do 17084 (KR); LIM, Hyung Sub, Yongin-Si Gyeonggi-do 17084 (KR); PARK, Tae Hyun, Yongin-Si Gyeonggi-do 17084 (KR)
(74) Representative: Michalski Hüttermann & Partner mbB
(86) International application number: PCT/KR2024/010716
(87) International publication number: WO 2025/135365

(57) **Abstract**

Disclosed are a composite cathode active material, a cathode including the same, and an all-solid-state secondary battery, the composite cathode active material including a composite of Li₂S, a lithium salt, and a carbon-based material, wherein a size of Li₂S crystallites obtained from an XRD spectrum of the composite is 9.5 nm or less, and the composite includes a solid solution of Li₂S and a lithium salt and has a pellet density of 1.65 g/cm³ or more.

## Description

### Technical Field

The present disclosure relates to a composite cathode active material, a cathode including the same, and an all-solid-state secondary battery.

### Background Art

Recently, due to industrial demands, the development of batteries with high energy density and safety is actively underway. For example, lithium batteries are used in a variety of applications, including information devices, communication devices, and automobiles. Since automobiles impact human lives, safety is also important.

Lithium batteries employing liquid electrolytes may have an increased risk of fire and/or explosion in the event of a short circuit. All-solid-state secondary batteries employing solid electrolytes instead of liquid electrolytes have been proposed. The likelihood of ignition of solid electrolytes is lower than that of liquid electrolytes.

By employing solid electrolytes instead of liquid electrolytes in all-solid-state secondary batteries, the risk of fires or explosions may be reduced. All-solid-state secondary batteries may provide improved safety.

### Disclosure of Invention

### Technical Problem

Ane aspect is to provide a composite cathode active material that provides improved specific capacity and cycle characteristics by having reduced crystallite size and improved density.

Another aspect is to provide a cathode including the composite cathode active material.

Another aspect is to provide an all-solid-state secondary battery including the cathode.

### Solution to Problem

According to an embodiment,
there is provided a composite cathode active material including: a composite of Li₂S, a lithium salt, and a carbon-based material,
wherein a size of Li₂S crystallites obtained from an XRD spectrum of the composite is 9.5 nm or less,
the composite includes a solid solution of Li₂S and a lithium salt, and
has a pellet density of 1.65 g/cm³ or more.

According to another embodiment,
there is provided a cathode comprising: a cathode current collector; and a cathode active material layer disposed on one side or both sides of the cathode current collector,
wherein the cathode active material layer includes the above-described composite cathode active material and a sulfide-based solid electrolyte.

According to another embodiment,
there is provided an all-solid-state secondary battery including: the above-described cathode; an anode; and an electrolyte layer disposed between the cathode and the anode,
wherein the anode includes an anode current collector and a first anode active material layer on the anode current collector.

According to another embodiment,
there is provided an all-solid-state secondary battery including: the above-described cathode; an anode; and an electrolyte layer disposed between the cathode and the anode,
wherein the cathode includes the above-described composite cathode active material.

### Advantageous Effects of Invention

According to an aspect, it is possible to provide an all-solid-state secondary battery having increased specific capacity and improved cycle characteristics by including a composite cathode active material having reduced crystallite size and improved density.

### Brief Description of Drawings

FIG. 1 shows XRD spectra of pulverized Li₂S, a Li₂S-LiI composite which is an intermediate product of Example 1, and a Li₂S-LiI-CNF composite prepared in Example 1.
FIG. 2A shows a scanning electron microscope image of Li₂S used in Example 1.
FIG. 2B shows a scanning electron microscope image of a Li₂S-LiI-CNF composite prepared in Example 1.
FIG. 3 is a cross-sectional view of an all-solid-state secondary battery according to an exemplary embodiment.
FIG. 4 is a cross-sectional view of an all-solid-state secondary battery according to an exemplary embodiment.
FIG. 5 is a cross-sectional view of an all-solid-state secondary battery according to an exemplary embodiment.
FIG. 6 is a cross-sectional view of an all-solid-state secondary battery according to an exemplary embodiment.
FIG. 7 is a cross-sectional view of an all-solid-state secondary battery according to an exemplary embodiment.

### Best Mode for Carrying out the Invention

Unless otherwise defined, all terms (including technical and scientific terms) used in the present disclosure have the same meaning as that commonly understood by one of those skilled in the art to which the present disclosure belongs. Further, the terms defined in commonly used dictionaries should be interpreted as having a meaning consistent with their meaning within the context of the relevant art and the present disclosure, and should not be interpreted in an idealized or overly formal sense.

Exemplary embodiments are described in the present disclosure with reference to cross-sectional views which are schematic views of idealized embodiments. In this way, for example, variations from the shapes of the drawings may be expected as a result of manufacturing techniques and/or tolerances. Therefore, embodiments described in the present disclosure should not be construed as being limited to the specific shapes of regions as illustrated in the drawings of the present disclosure, and should include, for example, deviations in shapes resulting from manufacturing. For example, a region illustrated or described as flat may typically have rough and/or non-linear features. Further, sharply illustrated angles may be round. Accordingly, the regions illustrated in the drawings are schematic in nature, and their shapes are not intended to illustrate the precise shape of the regions and are not intended to limit the scope of this disclosure.

The present inventive concept may be embodied in many different forms and should not be construed as limited to the embodiments described in the present disclosure. These embodiments are provided so that the present disclosure will be made thoroughly and completely, and are provided to fully transfer the scope of the present inventive concept to those skilled in the art. Identical reference numerals refer to identical components.

When a component is referred to as being "over" another component, it can be understood that it may be directly on another component, or that there may be other components intervening therebetween. In contrast, when a component is said to be "directly on" another component, there are no intervening component therebetween.

The terms "first," "second," "third," etc. may be used herein to describe various components, ingredients, regions, layers, and/or zones, these components, ingredients, regions, layers, and/or zones should not be limited by these terms. These terms are used only to distinguish one component, ingredient, region, layer or zone from another component, ingredient, region, layer or zone. Accordingly, a first component, ingredient, region, layer or zone described below may be referred to as a second component, ingredient, region, layer or zone without departing from the teachings of the present disclosure.

The terms used in the present disclosure is for the purpose of describing specific embodiments only and is not intended to limit the present inventive concept. The singular form used in the present application is intended to include the plural form including "at least one" unless the context clearly dictates otherwise. "At least one" should not be construed as limiting to the singular. As used in the present disclosure, the term "and/or" includes any and all combinations of one or more of the listed items. The terms "include" and/or "including" as used in the detailed description specify stated features, regions, integers, steps, operations, components and/or ingredients, but do not preclude the presence or addition of one or more other features, regions, integers, steps, operations, components and/or ingredients.

Spatially relative terms such as "bottom," "below," "lower," "upper," "top," and the like may be used herein to easily describe the relationship of one component or feature to another component or feature. It will be understood that spatially relative terms are intended to include different directions of a device when used or operated in addition to the directions illustrated in the drawings. For example, if the device in the drawing is overturned, a component described as being "under" or "below" another component or feature would be oriented "above" the other component or feature. Thus, the exemplary term "below" may include both upward and downward directions. The above device may be placed in other directions (rotated 90 degrees or in other directions), and the spatially relative terms used in the present disclosure may be interpreted accordingly.

The "group" refers to a group of the periodic table of elements according to the International Union of Pure and Applied Chemistry ("IUPAC") Group 1 to18 classification system.

In the present disclosure, the "particle size" refers to an average diameter when particles are spherical and refers to an average major axis length when the particles are non-spherical. The particle size may be measured using a particle size analyzer (PSA). The "particle size" is, for example, an average particle size. The "average particle size" is, for example, a median particle diameter, D50.

D50 is a size of the particle corresponding to 50% of the cumulative volume, calculated from the side of the particle with the smaller particle size in the size distribution of the particles measured by laser diffraction.

D90 is a size of the particle corresponding to 90% of the cumulative volume, calculated from the side of the particle with the smaller particle size in the size distribution of the particles measured by laser diffraction.

D10 is a size of the particle corresponding to 10% of the cumulative volume, calculated from the side of the particle with the smaller particle size in the size distribution of the particles measured by laser diffraction.

In the present disclosure, the "metal" includes both metals and metalloids such as silicon and germanium, in either an elemental or ionic state.

In the present disclosure, the "alloy" refers to a mixture of two or more metals.

In the present disclosure, the "electrode active material" refers to an electrode material capable of undergoing lithiation and delithiation.

In the present disclosure, the "cathode active material" refers to a cathode material capable of undergoing lithiation and delithiation.

In the present disclosure, the "anode active material" refers to an anode material capable of undergoing lithiation and delithiation.

In the present disclosure, the "lithiation" and "lithiating" refer to a process of adding lithium to an electrode active material.

In the present disclosure, the "delithiation" and "delithiating" refer to a process of removing lithium from an electrode active material.

In the present disclosure, the "charge" and "charging" refer to a process of providing electrochemical energy to a battery.

In the present disclosure, the "discharge" and "discharging" refer to a process of removing electrochemical energy from a battery.

In the present disclosure, the "positive electrode" or "cathode" refers to an electrode where electrochemical reduction and lithiation occur during a discharge process.

In the present disclosure, the "negative electrode" or "anode" refers to an electrode where electrochemical oxidation and delithiation occur during a discharge process.

Although specific embodiments have been described, alternatives, modifications, variations, improvements, and substantial equivalents, which are not currently anticipated or cannot be anticipated, may occur to the applicant or those skilled in the art. Accordingly, the appended claims, as filed and as amended, are intended to include all such alternatives, modifications, variations, improvements and substantial equivalents.

Hereinafter, according to exemplary embodiments, a composite cathode active material, a cathode including the same, and all-solid-state secondary battery will be described in more detail.

### [Composite cathode active material]

A composite cathode active material according to an embodiment includes a composite of Li₂S, a lithium salt, and a carbon-based material. The size of Li₂S crystallites obtained from an XRD spectrum of the composite is 9.5 nm or less The size of the Li₂S crystallites obtained from the XRD spectrum of the composite is, for example, 9.5 nm or less, 9.4 nm or less, 9.3 nm or less, 9.2 nm or less, 9.1 nm or less, or 9.0 nm or less. The composite includes a solid solution of Li₂S and a lithium salt. The size of the Li₂S crystallites obtained from the XRD spectrum of the composite is, for example, 1 to 9.5 nm, 1 to 9.4 nm, 2 to 9.3 nm, 2 to 9.2 nm, 2 to 9.1 nm, or 3 to 9.0 nm. The composite includes a solid solution of Li₂S and a lithium salt. The pellet density of the composite is 1.65 g/cm³ or more. The pellet density of the composite is, for example, 1.65 g/cm3 or more, 1.66 g/cm3 or more, 1.67 g/cm3 or more, 1.68 g/cm3 or more, 1.69 g/cm3 or more, or 1.70 g/cm3 or more.

Li₂S forms a composite with a lithium salt and a carbon-based material, thereby simultaneously improving the ionic conductivity and electronic conductivity of Li₂S. Since the composite includes a lithium salt, the ionic conductivity of the composite cathode active material can be improved, and the internal resistance of the cathode and lithium battery each containing the composite cathode active material can be reduced. Since the composite includes a carbon-based material, the electronic conductivity of the composite cathode active material can be improved, and the internal resistance of the cathode and lithium battery each containing the composite cathode active material can be reduced.

The composite includes Li₂S crystallites, and the size of the Li₂S crystallites is reduced, thereby alleviating the volume change of the Li₂S crystallites during charging and discharging. For example, as the size of the Li₂S crystallites decreases, the volume change caused by one Li₂S crystallite decreases, so the overall volume change of the composite during charging and discharging can be alleviated. For example, as the size of the Li₂S crystallites decreases, the grain boundaries between multiple Li₂S crystallites may more easily accommodate the volume change of the Li₂S crystallites during charging and discharging, thereby alleviating the volume change of the composite during charging and discharging. The possibility of occurrence of defects such as cracks can be reduced by the volume change of the composite during charging and discharging. Since the composite cathode active material includes such a composite, the cycle characteristics of a secondary battery including the composite cathode active material can be improved. For example, the lifespan characteristics of a lithium battery including the composite cathode active material can be improved.

The composite includes Li₂S crystallites, and the size of the Li₂S crystallites is reduced, and thus the contact area between the Li₂S crystallites and the lithium salt and/or carbon-based material may be further increased. The ionic conductivity and/or electronic conductivity of the composite may be further improved by an increase in the contact area between the Li₂S crystallites and the lithium salt and/or carbon-based material. Since the composite cathode active material includes such a composite, the reversibility of an electrode reaction in a secondary battery including the composite cathode active material can be improved. As a result, the specific capacity of the composite cathode active material can be increased.

Since the composite includes a solid solution of Li₂S and a lithium salt, the ionic conductivity of the composite can be increased. For example, since a solid solution of Li₂S and a lithium salt includes alkali metal ions arranged within the Li₂S crystallites, the ionic conductivity of the solid solution of Li₂S and a lithium salt can be improved compared to the ionic conductivity of Li₂S. As a result, the ionic conductivity of the composite can be improved, and the internal resistance of the composite can be decreased. Since the composite cathode active material includes such a composite, the cycle characteristics of a secondary battery including the composite cathode active material can be improved. For example, the high-rate characteristics of a secondary battery including the composite cathode active material can be improved.

Since the pellet density of the composite is 1.65 g/cm3 or more, the energy density of an all-solid-state secondary battery including the composite can be improved When the pellet density is less than 1.65 g/cm³, the compactness of the cathode active material including the composite may be lowered, thereby decreasing the energy density of an all-solid-state secondary battery.

The Li₂S-lithium salt-carbon-based material composite is distinguished from a simple mixture of Li₂S, a lithium salt, and a carbon-based material. The simple mixture of Li₂S, a lithium salt, and a carbon-based material cannot maintain dense interfaces among the Li₂S, the lithium salt, and the carbon-based material, thereby providing high interfacial resistance and consequently deteriorating the lifespan characteristics of a secondary battery.

The size of the composite cathode active material, that is, the size of the composite, may be, for example, 1 to 10 µm, 2 to 10 µm, 3 to 10 µm, 3 to 9 µm, or 3 to 8 µm. Since the composite has a size within this range, the composite can simultaneously provide improved ionic conductivity and electronic conductivity. When the size of the composite is excessively small, it may be difficult to secure a conductive pathway between the composite cathode active material particles due to the micronization of the carbon-based material. When the size of the composite is excessively large, the degree of complexation may be lowered. It may be difficult to secure electron-conducting and ion-conducting pathways within the composite. The size of the composite may be, for example, a D50 particle size. The size of the composite may be measured by, for example, a particle size analyzer (PSA) using laser. The size of the composite may be calculated by software from a scanning electron microscope image of the composite powder.

The D10 particle size of the composite may be, for example, 1 µm or more, 1.2 µm or more, 1.5 µm or more, or 2 µm or more. As the D10 particle size of the composite is within this range, the content of fine particles in the composite cathode active material can be reduced. As the content of fine particles in the composite cathode active material increases, the compactness of a cathode layer including the composite cathode active material decreases, and the energy density of an all-solid-state secondary battery including the cathode layer may be lowered. As the content of fine particle in the composite cathode active material increases, the interfacial resistance between the composite cathode active material particles may increase, and thus it may become difficult to form a conductive network. As a result, the cycle characteristics of an all-solid-state secondary battery including the composite cathode active material may be deteriorated.

The size of Li₂S particles included in the composite cathode active material, that is, the size of Li₂S particles included in the composite, may be, for example, 2 µm or less, 1.5 µm or less, or 1 µm or less. The size of Li₂S particles may be, for example, 0.1 to 2 µm, 0.1 to 1.5 µm, or 0.1 to 1 µm or less. As the Li₂S particles have size within this range, a volume change during charging and discharging may be suppressed, thereby suppressing the deterioration of the composite cathode active material including the composite during charging and discharging. When the size of the Li₂S particles increases excessively, the deterioration of the composite cathode active material including the composite may be accelerated due to an increase in volume change of the composite during charging and discharging. As a result, the cycle characteristics of a secondary battery including such a composite cathode active material may be deteriorated.

The size of the composite, for example, the particle size of the composite, may be measured using methods such as laser diffraction or scanning electron microscopy. The particle size of the composite is, for example, an arithmetic mean value of the particle sizes of multiple particles measured using software in a scanning electron microscope image. The size of the Li₂S particles included in the composite may be measured using, for example, a scanning electron microscope.

The electronic conductivity of the composite at 25 °C and 1 atm may be, for example, 0.1 mS/cm or more, 0.5 mS/cm or more, 1.1 mS/cm or more, 1.2 mS/cm or more, 1.3 mS/cm or more, 1.5 mS/cm or more, 2.0 mS/cm or more, or 2.5 mS/cm or more. The electronic conductivity of the composite at 25 °C and 1 atm may be, for example, 0.1 mS/cm to 1 S/cm, 0.5 mS/cm to 1 S/cm, 1.1 mS/cm to 1 S/cm, 1.2 mS/cm to 0.9 S/cm, 1.3 mS/cm to 0.8 S/cm, 1.5 mS/cm to 0.7 S/cm, 2.0 mS/cm to 0.5 S/cm, or 2.5 mS/cm to 0.5 S/cm. The electronic conductivity may be measured using, for example, electrochemical impedance spectrometry, DC polarization method, etc. Since the composite has electronic conductivity within this range, an increase in internal resistance of an all-solid-state secondary battery can be suppressed. As a result, the cycle characteristics of an all-solid-state secondary battery can be improved.

The ionic conductivity of the composite at 25 °C and 1 atm may be, for example, 0.1 mS/cm or more, 0.3 mS/cm or more, 0.33 mS/cm or more, 0.36 mS/cm or more, 0.40 mS/cm or more, or 0.43 mS/cm or more. The ionic conductivity of the composite at 25 °C and 1 atm may be, for example, 0.1 mS/cm to 1 S/cm, 0.3 mS/cm to 1 S/cm, 0.33 mS/cm to 0.9 S/cm, 0.36 mS/cm to 0.8 S/cm, 0.40 mS/cm to 0.7 S/cm, or 0.43 mS/cm to 0.5 S/cm. The ionic conductivity may be measured using, for example, electrochemical impedance spectrometry, DC polarization method, etc. Since the composite has ionic conductivity within this range, an increase in internal resistance of an all-solid-state secondary battery can be suppressed. As a result, the cycle characteristics of an all-solid-state secondary battery can be improved.

The composite includes Li₂S. Since Li₂S has a high theoretical capacity, it can provide a secondary battery having high energy density. However, since Li₂S has low ionic conductivity and/or electronic conductivity, a composite with a lithium salt and a carbon-based material is formed to overcome these disadvantages. The content of Li₂S in the composite may be, for example, 10 to 80 wt%, 20 to 70 wt%, 30 to 60 wt%, or 40 to 60 wt%. When the content of Li₂S increases excessively, it may not be easy to improve the ionic conductivity and/or electronic conductivity of Li₂S. When the content of Li₂S content is excessively low, the energy density of a secondary battery may decrease.

The composite includes a lithium salt. The lithium salt is, for example, a compound that does not include sulfur (S). The lithium salt may be, for example, a binary compound or a ternary compound. The lithium salt may be, for example, a binary compound composed of lithium and one element selected from Groups 13 to 17 of the Periodic Table of Elements. The lithium salt may be, for example, a ternary compound composed of lithium and two elements selected from Groups 13 to 17 of the Periodic Table of Elements. The lithium salt binary compound may include, for example, LiI, LiBr, LiCl, LiF, LiH, Li₂O, Li₂Se, Li₂Te, Li₃N, Li₃P, Li₃As, Li₃Sb, Li₃Al₂, LiB₃, or a combination thereof. The lithium salt ternary compound may include, for example, Li₃OCl, LiPF₆, LiBF₄, LiSbF₆, LiAsF₆, LiClO₄, LiAlO₂, LiAlCl₄, LiNO₃, Li₂CO₃, LiBH₄, Li₂SO₄, Li₃BO₃, Li₃PO₄, Li₄NCl, Li₅NCl₂, Li₃BN₂, or a combination thereof. Since the composite includes such a lithium salt, the ionic conductivity of the composite can be further improved This lithium salt can more easily form a solid solution with Li₂S in the composite. The content of the lithium salt in the composite may be 1 to 40 wt%, 5 to 35 wt%, 10 to 35 wt%, 15 to 35 wt%, 20 to 35 wt%, or 25 to 35 wt% of the total weight of the composite. When the content of the lithium salt increases excessively, the energy density of a secondary battery may decrease. When the content of the lithium salt is too low, the ionic conductivity of the composite may decrease, and thus the internal resistance of the composite cathode active material may increase. As a result, the cycle characteristics of a secondary battery may deteriorate.

The molar ratio of Li₂S and lithium salt in the composite may be, for example, 50:50 to 95:5, 60:40 to 95:5, 60:40 to 90:10, 65:35 to 90:10, 65:35 to 85:15, or 70:30 to 85:15. The molar ratio of Li₂S and lithium salt in the composite may be, for example, 50:50 to 95:5, 50:50 to 90:10, 50:50 to 85:15, 50:50 to 80:20, 50:50 to 75:25, or 50:50 to 70:30. Since the molar ratio of Li₂S and lithium salt is within the range, the cycle characteristics of a secondary battery including the composite cathode active material can be further improved. When the molar ratio of Li₂S is too high, the effect of improving ionic conductivity by a lithium salt may be slight. When the molar ratio of Li₂S is too low, the energy density of a secondary battery including the composite cathode active material may decrease.

The composite includes a carbon-based material. The carbon-based material is, for example, a material including a carbon atom, and any material that is used as a conductive material in the relevant technical field is possible.

The carbon-based material may include, for example, amorphous carbon. Since the carbon-based material includes amorphous carbon, side reactions between the carbon-based material and the solid electrolyte can be suppressed. Therefore, the cycle characteristics of an all-solid-state secondary battery including the composite can be further improved. The carbon-based material may be, for example, a sintered product of a carbon precursor. The carbon-based material may be, for example, carbon nanostructures. The carbon nanostructures may be, for example, one-dimensional carbon nanostructures, two-dimensional carbon nanostructures, three-dimensional carbon nanostructures, or a combination thereof. The carbon nanostructures may be, for example, carbon nanotubes, carbon nanofibers, carbon nanobelts, carbon nanorods, graphene, or a combination thereof. The carbon-based materials may be, for example, a porous carbon-based material or a non-porous carbon-based material. The porous carbon-based material may include, for example, periodic and regular two-dimensional or three-dimensional pores. The porous carbon-based material may be, for example, carbon black such as ketjen black, acetylene black, Denka black, thermal black, or channel black; graphite; activated carbon; or a combination thereof. The shape of the carbon-based material may be, for example, a particle shape, a sheet shape, a flake shape, or the like, but is not limited thereto; and any shape used as a carbon-based material in the relevant technical field is possible.

The carbon-based material may include, for example, a fibrous carbon-based material. Since the composite includes a fibrous carbon-based material, the electronic conductivity of the composite can be further improved. Since the composite includes a fibrous carbon-based material, the electronic conduction from the surface to the interior of the composite can be performed more easily. The internal resistance of the composite cathode active material including the composite can be reduced, and the cycle characteristics of an all-solid-state secondary battery including the composite cathode active material can be further improved. The aspect ratio of the fibrous carbon-based material may be, for example, 2 or more, 3 or more, 4 or more, 5 or more, 10 or more, or 20 or more. The aspect ratio of the fibrous carbon-based material may be, for example, 2 to 30, 3 to 30, 4 to 30, 5 to 30, 10 to 30, or 20 to 30. The aspect ratio of the fibrous carbon-based material may be, for example, 2 to 30, 2 to 20, 2 to 10, 2 to 8, 2 to 5, or 2 to 4. Since the fibrous carbon-based material has an aspect ratio within this range, the overall electronic conductivity of the composite can be improved, and the imbalance in local electronic conductivity within the composite may be further alleviated. The fibrous carbon-based material may include, for example, carbon nanostructures. The carbon nanostructures may include, for example, carbon nanofibers (CNF), carbon nanotubes (CNT), carbon nanobelts, carbon nanorods, or a combination thereof. The carbon nanostructures may form a primary carbon nanostructure composed of a single carbon nanostructure and a secondary carbon nanostructure composed of multiple aggregated carbon nanostructures.

The diameter of the primary carbon nanostructure may be, for example, 1 nm to 200 nm, 1 nm to 150 nm, 1 nm to 100 nm, 1 nm to 50 nm, 1 nm to 30 nm, or 1 nm to 20 nm. The length of the primary carbon nanostructure may be, for example, 10 nm to 2 µm, 10 nm to 1.5 µm, 10 nm to 1 µm, 10 nm to 500 nm, 10 nm to 400 nm, 10 nm to 300 nm, 10 nm to 200 nm, or 10 nm to 100 nm. The diameter and length of the primary carbon nanostructure may be measured from scanning electron microscope (SEM) or transmission electron microscope (TEM) images. Alternatively, the diameter and/or length of the primary carbon nanostructure may be measured by laser diffraction.

The secondary carbon nanostructure is, for example, a structure formed by wholly or partially assembling the primary carbon nanostructures to form a bundle or cluster shape. The secondary carbon nanostructure may include, for example, a bundle-type carbon nanostructure, a rope-type carbon nanostructure, or a combination thereof. The diameter of the secondary carbon nanostructure may be, for example, 2 nm to 200 nm, 3 nm to 150 nm, 5 nm to 100 nm, 5 nm to 50 nm, 5 nm to 30 nm, or 5 nm to 20 nm. The length of the secondary carbon nanotube structure may be, for example, 20 nm to 2 µm, 30 nm to 1.5 µm, 50 nm to 1 µm, 50 nm to 500 nm, 50 nm to 400 nm, 50 nm to 300 nm, 50 nm to 200 nm, or 50 nm to 100 nm or more. The diameter and length of the secondary carbon nanostructure may be measured from scanning electron microscope (SEM) images or optical microscope images. Alternatively, the diameter and/or length of the secondary carbon nanostructure may be measured by laser diffraction. The secondary carbon nanostructure may be converted into primary carbon nanostructures by dispersing them in a solvent, and then used to prepare the composite.

The content of the carbon-based material included in the composite may be, for example, 1 to 20 wt%, 5 to 20 wt%, or 10 to 20 wt% of the total weight of the composite. When the content of the carbon-based material increases excessively, the energy density of a secondary battery may decrease. When the content of the carbon-based material decreases excessively, the electronic conductivity of the composite may deteriorate, and thus the internal resistance of the composite cathode active material may increase. As a result, the cycle characteristics of a secondary battery may deteriorate.

The composite may include, for example, 10 to 80 parts by weight of Li₂S, 1 to 40 parts by weight of a lithium salt, and 1 to 20 parts by weight of a carbon-based material, based on 100 parts by weight of the composite. The content of Li₂S included in the composite may be, for example, 10 to 80 parts by weight, 20 to 70 parts by weight, 30 to 60 parts by weight, or 40 to 60 parts by weight of Li2S based on 100 parts by weight of the composite. The content of the lithium salt included in the composite may be, for example, 10 to 40 parts by weight, 15 to 40 parts by weight, 20 to 40 parts by weight, or 25 to 35 parts by weight based on 100 parts by weight of the composite. The content of the carbon-based material included in the composite may be, for example, 1 to 20 parts by weight, 5 to 20 parts by weight, or 5 to 15 parts by weight based on 100 parts by weight of the composite. Since the composite has a composition of Li₂S, a lithium salt, and a carbon-based material within this range, the composite cathode active material including the composite can provide excellent ionic conductivity and/or electronic conductivity.

The Mohs hardness of each of the lithium salt and the carbon-based material may be greater than that of Li₂S. The Mohs hardness of Li₂S is, for example, 0.6 or less. The Mohs hardness of Li₂S is, for example, 0.6. The Mohs hardness of the lithium salt may be 0.7 or more, 0.8 or more, 0.9 or more, 1.0 or more, 1.5 or more, or 2.0 or more. Since the lithium salt has a Mohs hardness within this range, the grinding of Li₂S can be performed more easily during a milling process, and a solid solution of Li₂S and a lithium salt can be formed more easily. The Mohs hardness of LiI is, for example, 2.0. The Mohs hardness of NaI is, for example, 2.1. The Mohs hardness of the carbon-based material may be 0.7 or higher, 0.8 or more, 0.9 or more, 1.0 or more, 1.2 or more, or 1.5 or more. Since the carbon-based material has a Mohs hardness within this range, the grinding of Li₂S can be performed more easily during a milling process, and a Li₂S-lithium salt-carbon-based material composite can be formed more easily. The Mohs hardness of carbon nanofiber (CNF) is, for example, 1.5.

A first lattice constant (d1) derived from a first peak appearing at a diffraction angle of 2θ = 27° ± 2.0° corresponding to a (111) crystal plane of Li₂S in the XRD spectrum of the composite may be greater than a second lattice constant (d2) derived from a second peak appearing at a diffraction angle of 2θ = 27° ± 2.0° corresponding to the (111) crystal plane of Li₂S in an XRD spectrum of Li₂S used in the preparation of the composite. Since the Li₂S-lithium salt-carbon-based material composite has a larger lattice constant (d) than the Li₂S used in the preparation of the composite, alkali metal ions can be more easily transported within the Li₂S crystal structure of the composite. The ionic conductivity of the composite cathode active material including the composite can be further improved. The internal resistance of a secondary battery including the composite cathode active material can be reduced, and the cycle characteristics thereof can be improved. The difference between the first lattice constant (d1) and the second lattice constant (d2) may be 0.05 Å or more, 0.1 Å or more, 0.15 Å or more, 0.2 Å or more, or 0.25 Å or more. The first lattice constant (d1) may be, for example, 5.78 Å or more, 5.80 Å or more, 5.82 Å or more, 5.85 Å or more, 5.90 Å or more, 5.95 Å or more, or 6.0 Å or more. Since the composite has such a first lattice constant (d1), the ionic conductivity of the composite cathode active material including the composite can be further improved. The internal resistance of a secondary battery including the composite cathode active material can be reduced, and the cycle characteristics thereof can be improved.

For example, in the XRD spectrum of the composite, the first peak appearing at a diffraction angle of 2θ = 27° ± 2.0° corresponding to the (111) crystal plane of Li₂S has a first diffraction angle, and in the XRD spectrum of Li₂S used in the preparation of the composite, the second peak appearing at a diffraction angle of 2θ = 27° ± 2.0° corresponding to the (111) crystal plane of Li₂S has a second diffraction angle, and the first diffraction angle may be smaller than the second diffraction angle. For example, the position of the first peak may be shifted to a low angle compared to the position of the second peak. Therefore, the Li₂S-lithium salt-carbon-based material composite may have a reduced crystallite size compared to the Li₂S used in the preparation of the composite. Since the Li₂S-lithium salt-carbon-based material composite has a reduced crystallite size, the volume change of the crystallites during charging and discharging is reduced, so the volume change of the composite including multiple crystallites during charging and discharging can be alleviated. The occurrence of defects such as cracks during charging and discharging of the composite cathode active material including such a composite can be suppressed. As a result, the cycle characteristics of a secondary battery including the composite cathode active material can be improved.

For example, in the XRD spectrum of the composite, the first peak appearing at a diffraction angle of 2θ = 27° ± 2.0° corresponding to the (111) crystal plane of Li₂S has a first full width at half maximum (FWHM1), and in the XRD spectrum of Li₂S used in the preparation of the composite, the second peak appearing at a diffraction angle of 2θ = 27° ± 2.0° corresponding to the (111) crystal plane of Li₂S has a second full width at half maximum (FWHM2), and the first full width at half maximum may be greater than the second full width at half maximum. Therefore, the Li₂S-lithium salt-carbon-based material composite may have increased lattice strain compared to the Li₂S used in the preparation of the composite. For example, since Li₂S and a lithium salt forms a solid solution, the Li₂S-lithium salt-carbon-based material composites may have increased lattice strain Since the Li₂S-lithium salt-carbon-based material composite has an increased full width at half maximum (FWHM) compared to the Li₂S used in the preparation of the composite, the ionic conductivity of the composite cathode active material including the composite can be further improved. The internal resistance of a secondary battery including the composite cathode active material can be reduced, and the cycle characteristics thereof can be improved.

The first full width at half maximum may be, for example, 1° or more, 1.05° or more, 1.10° or more, or 1.15° or more. Since the composite having a first full width at half maximum (FWHM1) within this range, the ionic conductivity of the composite cathode active material including the composite can be further improved. The internal resistance of a secondary battery including the composite cathode active material can be reduced, and the cycle characteristics thereof can be improved.

### [Cathode]

### [Cathode: cathode active material]

A cathode according to an embodiment includes: a cathode current collector; and a cathode active material layer disposed on one side or both sides of the cathode current collector. The cathode active material layer includes the above-described composite cathode active material, and a solid electrolyte. The cathode may have a further reduced internal resistance by including a composite cathode active material and a solid electrolyte. Therefore, the cycle characteristics of a secondary battery including the cathode can be further improved.

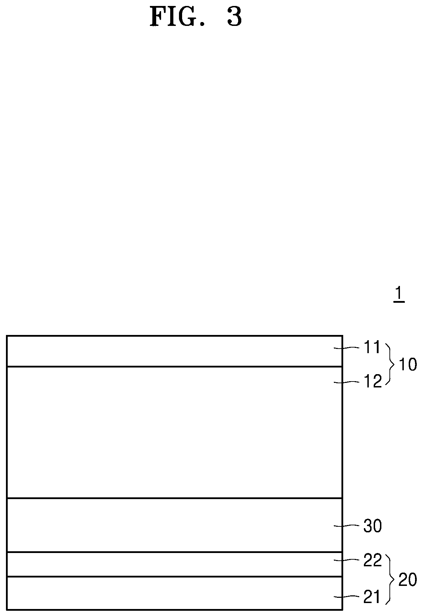

Referring to FIGS. 3 to 7, a cathode 10 includes a cathode current collector 11; and a cathode active material layer 12 disposed on one side or both sides of the cathode current collector 11. The cathode active material layer 12 includes the above-described composite cathode active material and a solid electrolyte.

The composite cathode active material may be included in an amount of 40 to 90 parts by weight, 40 to 80 parts by weight, 50 to 80 parts by weight, or 50 to 70 parts by weight based 100 parts by weight of the cathode active material layer 12. When the content of the composite cathode active material decreases excessively, the energy density of a secondary battery decreases. When the content of the composite cathode active material increases excessively, the deterioration of the cathode may be accelerated due to changes in the volume of the cathode during charging and discharging. As a result, the cycle characteristics of a secondary battery 1 may deteriorate.

The cathode active material layer 12 may additionally include other cathode active materials in addition to the above-described composite cathode active material.

Other cathode active materials may include, for example, Li₂S-containing composites. The Li₂S-containing composites include, for example, a composite of Li₂S and a carbon-based material, a composite of Li₂S, a carbon-based material and a solid electrolyte, a composite of Li₂S and a solid electrolyte, a composite of Li₂S and a lithium salt, a composite of Li₂S and a metal carbide, a composite of Li₂S, a carbon-based material and a metal carbide, a composite of Li₂S and a metal nitride, a composite of Li₂S, a carbon-based material and a metal nitride, or a combination thereof.

The composite of Li₂S and a carbon-based material includes a carbon-based material. The carbon-based material refers to the above-described carbon-based material of the composite cathode active material. The method of preparing the composite of Li₂S and a carbon-based material may be, but is not limited to, a dry method, a wet method, or a combination thereof, and any method used in the relevant technical field is possible. The method of preparing the composite of Li₂S and a carbon-based material include, but are not limited to, milling, heat treatment, and deposition, and any method used in the relevant technical field is possible.

The composite of Li₂S, a carbon-based material, and a solid electrolyte includes a carbon-based material and a solid electrolyte. The carbon-based material refers to the above-described composite of Li₂S and a carbon-based material. Any solid electrolyte that is used as an ion-conducting material in the relevant technical field is possible. The solid electrolyte is, for example, an inorganic solid electrolyte. The solid electrolyte may be, for example, a crystalline solid electrolyte, an amorphous solid electrolyte, or a combination thereof. The solid electrolyte is, for example, a sulfide-based solid electrolyte, an oxide-based solid electrolyte, a polymer solid electrolyte, or a combination thereof. The sulfide-based solid electrolyte contains, for example, Li, S, and P, and may optionally further contain a halogen element. The sulfide-based solid electrolyte may be selected from the sulfide-based solid electrolytes used in an electrolyte layer. The oxide-based solid electrolyte may have, for example, an ionic conductivity of 1×10-5 S/cm or more at room temperature. The oxide-based solid electrolyte contains, for example, Li, O and a transition metal element, and may optionally contain other elements. The oxide-based solid electrolyte may be, for example, a solid electrolyte having an ionic conductivity of 1×10-5 S/cm or more at room temperature. The oxide-based solid electrolyte may be selected from the oxide-based solid electrolytes used in an electrolyte layer.

The composite of Li₂S and a solid electrolyte includes a solid electrolyte. The solid electrolyte refers to the above-described composite of Li₂S, a carbon-based material and a solid electrolyte.

The composite of Li₂S and lithium salt includes Li₂S and a lithium salt. The lithium salt refers to the lithium salt of the above-described composite cathode active material. The lithium salt is, particularly, at least one lithium halide compound selected from LiF, LiCl, LiBr, and LiI. The composite of Li₂S and a lithium salt may be, for example, a composite of Li₂S and a lithium halide. Since the composite of Li₂S and a lithium salt includes a lithium halide compound, improved ionic conductivity can be provided. The composite of Li₂S and a lithium salt is distinguished from a simple mixture of Li₂S, a carbon-based material, and a lithium salt. The simple mixture of Li₂S and a lithium salt may provide high interfacial resistance by failing to maintain a dense interface between Li₂S and a lithium salt, which may result in a deterioration in the lifespan characteristics of an all-solid-state secondary battery.

The composite of Li₂S and a metal carbide includes a metal carbide. The metal carbide is, for example, a two-dimensional metal carbide. The two-dimensional metal carbide is expressed, for example, as Mₙ₊₁CₙTₓ (where M is a transition metal, T is a terminal group, T is O, OH, and/or F, n=1, 2, or 3, and x is the number of terminal groups). The two-dimensional metal carbide is, for example, Ti₂CTₓ, (Ti₀.5, Nb₀.₅)₂CTₓ, Nb₂CTₓ, V₂CTₓ, Ti₃C₂Tₓ, (V₀.5, Cr₀.₅)₃C₂Tₓ, Ti₃CNTₓ, Ta₄C₃Tₓ, Nb₄C₃Tₓ, or a combination thereof. The surface of the two-dimensional metal carbide is terminated with O, OH and/or F.

The composite of Li₂S and a carbon-based material and a metal carbide includes a carbon-based material and a metal carbide. The carbon-based material refers to the above-described composite of Li₂S and a carbon-based material. The metal carbide refers to the above-described composite of Li₂S and a metal carbide.

The composite of Li₂S and a metal nitride includes a metal nitride. The metal nitride is, for example, a two-dimensional metal nitride. The two-dimensional metal nitride is expressed, for example, as Mₙ₊₁NₙTₓ (where M is a transition metal, T is a terminal group, T is O, OH, and/or F, n=1, 2, or 3, and x is the number of terminal groups). The surface of the two-dimensional metal nitride is terminated with O, OH and/or F.

The composite of Li₂S, a carbon-based material and a metal nitride includes a carbon-based material and a metal nitride. The carbon-based material refers to the above-described composite of Li₂S and a carbon-based material. The metal nitride refers to the above-described composite of Li₂S and a metal nitride.

The cathode active material layer 12 may additionally include, for example, a sulfide compound that is distinct from the above-described cathode active material. The sulfide compound may be, for example, a compound containing a metal element other than Li and a sulfur element. The sulfide compound may be, for example, a compound containing a metal element belonging to Groups 1 to 14 of the Periodic Table of Elements with an atomic weight of 10 or more and a sulfur element. The sulfide compound may be, for example, FeS₂, VS₂, NaS, MnS, FeS, NiS, CuS, or a combination thereof. Since the cathode active material layer additionally includes a sulfide compound, the cycle characteristics of an all-solid-state secondary battery can be further improved. The content of such a sulfide compound included in the cathode active material layer 12 may be 10 wt% or less, 5 wt% or less, 3 wt% or less, or 1 wt% or less of the total weight of the cathode active material layer 12.

### [Cathode: solid electrolyte]

The cathode active material layer 12 may further include, for example, a solid electrolyte. The solid electrolyte may be, for example, a sulfide-based solid electrolyte. The solid electrolyte included in the cathode 10 may be the same as or different from the solid electrolyte included in the electrolyte layer 30. Details of the solid electrolyte, refer to the section of the electrolyte layer 30.

The solid electrolyte included in the cathode active material layer 12 may have a smaller average particle size D50 than the solid electrolyte included in the electrolyte layer 30. For example, the average particle size D50 of the solid electrolyte included in the cathode active material layer 12 may be 90 % or less, 80 % or less, 70 % or less, 60 % or less, 50 % or less, 40 % or less, 30 % or less, or 20 % or less of the average particle size D50 of the solid electrolyte included in the electrolyte layer 30. The average particle size D50 is, for example, a median particle diameter D50. The median particle diameter D50 is a size of the particle corresponding to 50% of the cumulative volume, calculated from the side of the particle with the smaller particle size in the size distribution of the particles measured by laser diffraction.

The solid electrolyte may be included in an amount of 10 to 60 parts by weight, 10 to 50 parts by weight, 20 to 50 parts by weight, or 30 to 50 parts by weight, based on 100 parts by weight of the cathode active material layer 12. When the content of the solid electrolyte decreases excessively, the internal resistance of the cathode may increase, and thus the cycle characteristics of a secondary battery can be deteriorated. When the content of the sulfide-based solid electrolyte increases excessively, the energy density of the secondary battery 1 may decrease.

### [Cathode: conductive material]

The cathode active material layer 12 may further include a conductive material. The conductive material may be, for example, a carbon-based conductive material, a metal-based conductive material, or a combination thereof. The carbon-based conductive material may be, but is not limited thereto, for example, graphite, carbon black, acetylene black, ketjen black, carbon fiber, or a combination thereof, and any material used as a carbon-based conductive material in the relevant technical field may be used. The metal-based conductive material may be, but is not limited to, metal powder, metal fiber, or a combination thereof, and any material used as a metal-based conductive material in the relevant technical field may be used. The content of the conductive material included in the cathode active material layer 12 may be, for example, 1 wt% to 30 wt%, 1 wt% to 20 wt%, or 1 wt% to 10 wt% of the total weight of the cathode active material layer 12.

The cathode active material layer 12 includes a carbon-based material, and the carbon-based material may be placed only in the composite cathode active material. The cathode active material layer 12 may not additionally include another carbon-based material in addition to the composite cathode active material having the carbon-based material. Since the cathode active material layer does not include another carbon-based material, the energy density of the cathode and secondary battery 1 can be improved, and the manufacturing process thereof can be simplified.

### [Cathode: binder]

The cathode active material layer 12 may further include a binder. The binder may be, but is not limited to, styrene butadiene rubber (SBR), polytetrafluoroethylene, polyvinylidene fluoride, polyethylene, etc., and any binder used in the relevant technical field may be used. The content of the binder included in the cathode active material layer 12 may be, for example, 0.1 wt% to 10 wt%, 0.5 to 5 wt%, or 0.5 to 2 wt% of the total weight of the cathode active material layer 12. The binder may be omitted.

### [Cathode: other additives]

The cathode active material layer 12 may further include additives such as fillers, coating agents, dispersants, and ion conductive aids in addition to the above-described cathode active material, solid electrolyte, binder, and conductive material.

As fillers, coating agents, dispersants, and ion conductivity aids that can be included in the cathode active material layer 12, known materials generally used in electrodes of all-solid-state secondary batteries may be used.

### [Cathode: cathode current collector]

As the cathode current collector 11, a plate or foil made of, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof may be used. The cathode current collector 11 may be omitted. The thickness of the cathode current collector 11 is, for example, 1 µm to 100 µm, 1 µm to 50 µm, 5 µm to 25 µm, or 10 µm to 20 µm.

The cathode current collector 11 may include, for example, a base film and a metal layer disposed on one or both sides of the base film. The base film may include, for example, a polymer. The polymer may be, for example, a thermoplastic polymer. The polymer may include, for example, polyethylene terephthalate (PET), polyethylene (PE), polypropylene (PP), polybutylene terephthalate (PBT), polyimide (PI), or a combination thereof. The base film may be, for example, an insulator. Since the base film includes an insulating thermoplastic polymer, when a short circuit occurs, the base film softens or liquefies, thereby blocking battery operation and suppressing a rapid increase in current. The metal layer may include, for example, indium (In), copper (Cu), magnesium (Mg), stainless steel, titanium (Ti), iron (Fe), cobalt (Co), nickel (Ni), zinc (Zn), aluminum (Al), germanium (Ge), or an alloy thereof. The metal layer acts as an electrochemical fuse, and can thus be cut off in case of overcurrent to prevent short circuits. The limit current and maximum current can be controlled by adjusting the thickness of the metal layer. The metal layer may be plated or deposited on the base film. When the thickness of the metal layer decreases, the limit current and/or maximum current of the cathode current collector 11 decreases, so the stability of a lithium battery during a short circuit can be improved. A lead tab may be added to the metal layer for external connection. The lead tab may be welded to the metal layer or the metal layer/base film laminate by ultrasonic welding, laser welding, spot welding, or the like. During welding, while the base film and/or the metal layer melts, the metal layer may be electrically connected to the lead tab. To make the welding between the metal layer and the lead tab stronger, a metal chip may be added between the metal layer and the lead tab. The metal chip may be a thin piece of the same material as the metal of the metal layer. The metal chip may be, for example, a metal foil, a metal mesh, or the like. The metal chip may be, for example, aluminum foil, copper foil, SUS foil, or the like. Since the metal chip is disposed on the metal layer and then welded with the lead tab, the lead tab may be welded to a metal chip/metal layer laminate or a metal chip/metal layer/base film laminate. During welding, while the base film, the metal layer, and/or the metal chip melts, the metal layer or the metal layer/metal chip laminate may be electrically connected to the lead tab. A metal chip and/or a lead tab may be added onto a portion of the metal layer. The thickness of the base film may be, for example, 1 to 50 µm, 1.5 to 50 µm, 1.5 to 40 µm, or 1 to 30 µm. Since the base film has a thickness within this range, the weight of an electrode assembly may be reduced more effectively. The melting point of the base film may be, for example, from 100 to 300 °C, 100 to 250 °C, or 100 to 200 °C. Since the base film has a melting point within this range, the base film melts during the process of welding the lead tab, and may thus be easily bonded to the lead tab. Surface treatment, such as corona treatment, may be performed on the base film to improve adhesion between the base film and the metal layer. The thickness of the metal layer may be, for example, 0.01 to 3 µm, 0.1 to 3 µm, 0.1 to 2 µm, or 0.1 to 1 µm. Since the metal layer has a thickness within this range, the stability of an electrode assembly may be secured while maintaining conductivity. The thickness of the metal chip may be, for example, 2 to 10 µm, 2 to 7 µm, or 4 to 6 µm. Since the metal piece has a thickness within this range, the connection between the metal layer and the lead tab may be performed more easily. Since the cathode current collector 11 has this structure, the weight of the cathode may be reduced, and as a result, the energy density of the cathode and the lithium battery may be improved.

### [Cathode: inactive member]

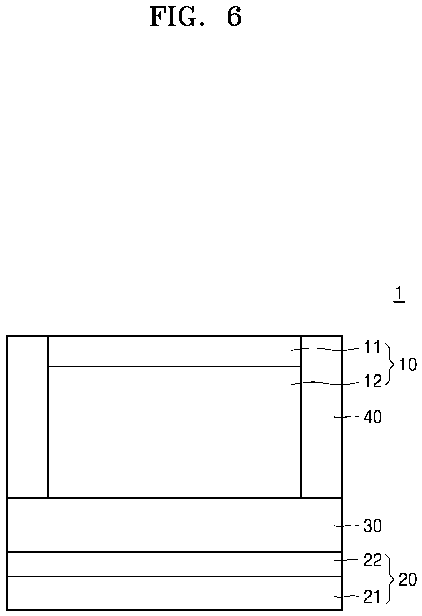

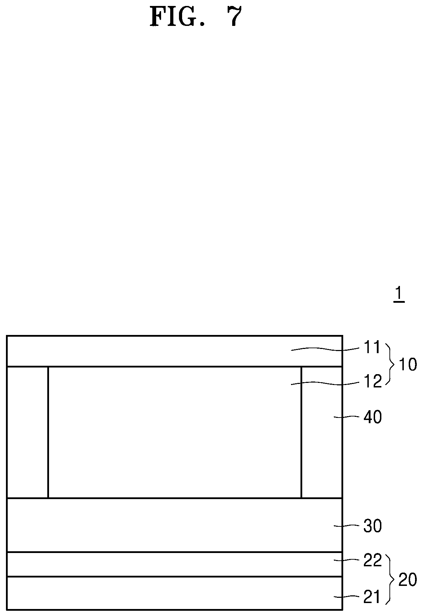

Referring to FIGS. 6 and 7, the cathode 10 includes a cathode current collector 11 and a cathode active material layer 12 disposed on one side of the cathode current collector 11. An inactive member 40 is disposed on one side of the cathode 10. Referring to FIG. 6, the inactive member 40 is disposed on one side of the cathode active material layer 12 and one side of the cathode current collector 11. Referring to FIG. 7, the inactive member 40 is disposed on one side of the cathode active material layer 12 and is disposed between the electrolyte layer 30 and the cathode current collector 11 facing the electrolyte layer 30. The inactive member 40 may not be disposed on one side of the cathode current collector 11. The electrolyte layer 30 may be, for example, a solid electrolyte layer.

Since the cathode 10 includes the inactive member 40, cracks of the electrolyte layer 30 is prevented during the manufacturing and/or charging and discharging of the all-solid-state secondary battery 1, resulting in improved cycle characteristics of the all-solid-state secondary battery 1. In the all-solid-state secondary battery 1 that does not include the inactive member 40, when manufacturing and charging and/or discharging the all-solid-state secondary battery 1, uneven pressure is applied to the electrolyte layer 30 in contact with the cathode 10, thereby increasing the possibility of a short circuit occurring due to cracks occurring in the electrolyte layer 30 and the growth of lithium metal through the cracks.

In the all-solid-state secondary battery 1, the thickness of the inactive member 40 is greater than or equal to the thickness of the cathode active material layer 12. Alternatively, in the all-solid-state secondary battery 1, the thickness of the inactive member 40 is substantially equal to the thickness of the cathode 10. Since the thickness of the inactive member 40 is equal to the thickness of the cathode 10, a uniform pressure is applied between the cathode 10 and the electrolyte layer 30, and the cathode 10 and the electrolyte layer 30 are sufficiently adhered to each other, so that the interfacial resistance between the cathode 10 and the electrolyte layer 30 can be reduced. In addition, since the electrolyte layer 30 is sufficiently sintered during the process of manufacturing the all-solid-state secondary battery 1 by pressing, the internal resistance of the electrolyte layer 30 and the all-solid-state secondary battery 1 including the same is reduced.

The inactive member 40 surrounds the side of the cathode 10 and comes into contact with the electrolyte layer 30. Since the inactive member 40 surrounds the side of the cathode 10 and comes into contact with the electrolyte layer 30, cracks of the electrolyte layer 30 that occur due to a pressure difference during the pressing process in the electrolyte layer 30 that does not come into contact with the cathode 10 can be effectively suppressed. The inactive member 40 surrounds the side of the cathode 10 and is separated from the anode 20, more specifically, the first anode active material layer 22. The inactive member 40 surrounds the side of the cathode 10, comes into contact with the electrolyte layer 30, and is separated from the anode 20. Accordingly, the possibility of a short circuit occurring due to the physical contact between the cathode 10 and the first anode active material layer 22 or due to the overcharging of lithium is suppressed. For example, the inactive member 40 is disposed on one side of the cathode active material layer 12 and, at the same time, is disposed on one surface of the cathode current collector 11, thereby more effectively suppressing the possibility of a short circuit occurring due to the contact between the cathode current collector 11 and the anode 20.

Referring to FIGS. 6 and 7, the inactive member 40 extends from one side of the cathode 10 to the end portion of the electrolyte layer 30. Since the inactive member 40 extends to the end portion of the electrolyte layer 30, cracks occurring at the end portion of the electrolyte layer 30 can be suppressed. The end portion of the electrolyte layer 30 is an outermost portion that comes into contact with the side of the electrolyte layer 30. The inactive member 40 extends to the outermost portion that comes into contact with the side of the electrolyte layer 30. The inactive member 40 is separated from the anode 20, more specifically, from the first anode active material layer 22. The inactive member 40 extends to the end portion of the electrolyte layer 30, but does not come into contact with the anode 20. The inactive member 40 fills a space extending from one side of the cathode 10 to the end portion of the electrolyte layer 30.

Referring to FIGS. 6 and 7, the width of the inactive member 40 extending from one side of the cathode 10 to the end of the electrolyte layer 30 is, for example, 1 to 30 %, 1 to 25 %, 1 to 20 %, 1 to 15 %, 1 to 10 %, or 1 to 5 % of the width between one side of cathode 10 and the other side facing the one side thereof. When the width of the inactive member 40 is too large, the energy density of the all-solid-state secondary battery 1 decreases. When the width of the inactive member 40 is too small, the effect of disposing the inactive member 40 is slight.

The area of the cathode 10 is smaller than the area of the electrolyte layer 30 in contact with the cathode 10. The inactive member 40 is disposed to surround the side of the cathode 10 to compensate for a difference between the area of the cathode 10 and the area of the electrolyte layer 30. Since the area of the inactive member 40 compensates for the difference between the area of the cathode 10 and the area of the electrolyte layer 30, cracks in the electrolyte layer 30 that occur due to the pressure difference during the pressing process are effectively suppressed. For example, the sum of the area of the cathode 10 and the area of the inactive member 40 is equal to the area of the electrolyte layer 30. The electrolyte layer 30 may be, for example, a solid electrolyte layer.

The area of the cathode 10 is, for example, less than 100%, 99% or less, 98% or less, 97% or less, 96% or less, or 95% or less of the area of the electrolyte layer 30. The area of the cathode 10 is, for example, less than 50% to 100%, 50% to 99%, 55% to 98%, 60% to 97%, 70% to 96%, 80% to 95%, or 85% to 95% of the area of the electrolyte layer 30.

When the area of the cathode 10 is equal to or larger than the area of the electrolyte layer 30, the possibility of a short circuit occurring due to physical contact between the cathode 10 and the first anode active material layer 22 or overcharging of lithium increases. The area of the cathode 10 is, for example, equal to the area of the cathode active material layer 12. The area of the cathode 10 is, for example, equal to the area of the cathode current collector 11.

The area of the inactive member 40 is, for example, 50% or less, 40% or less, 30% or less, 20% or less, or 10% or less of the area of the cathode 10. The area of the inactive member 40 is, for example, 1% to 50%, 5% to 40%, 5% to 30%, 5% to 20%, or 5% to 15% of the area of the cathode 10.

The area (S1) of the cathode 10 is smaller than the area (S4) of the anode current collector 21. The area (S1) of the cathode 10 is, for example, less than 100%, 99% or less, 98% or less, 97% or less, 96% or less, or 95% or less of the area (S4) of the anode current collector 21. The area (S1) of the cathode 10 is, for example, less than 50% to 100%, 50% to 99%, 55% to 98%, 60% to 97%, 70% to 96%, 80% to 95%, or 85% to 95% of the area (S4) of the anode current collector 21. The area (S4) of the anode current collector 21 is, for example, equal to the area of the anode 20. The area (S4) of the anode current collector 21 is, for example, equal to the area of the first anode active material layer 22.

In the present disclosure, the "same" area, length, width, thickness and/or shape includes all instances of having "substantially the same" area, length, width, thickness and/or shape, except where the area, length, width, thickness and/or shape are intentionally different from each other. The "same" area, length, width and/or thickness includes a range where the unintended difference in area, length, width and/or thickness of the objects being compared is, for example, less than 3%, less than 2%, less than 1%, less than 0.5%, or less than 0.1%.

The thickness of the inactive member 40 is, for example, greater than the thickness of the first anode active material layer 22. The thickness of the first anode active material layer 22 is, for example, 50% or less, 40% or less, 30% or less, 20% or less, or 10% or less of the thickness of the inactive member 40. The thickness of the first anode active material layer 22 is, for example, 1% to 50%, 1% to 40%, 1% to 30%, 1% to 20%, or 1% to 10% of the thickness of the inactive member 40.

The inactive member 40 may be a gasket. Since a gasket is used as the inactive member 40, cracks of the electrolyte layer 30 that occur due to a pressure difference during a pressing process can be effectively suppressed.

The inactive member 40 has, for example, a single-layer structure. Alternatively, although not shown in the drawings, the inactive member 40 may have a multilayer structure. In the inactive member 40 having a multilayer structure, each layer may have a different composition. The inactive member having a multilayer structure may have, for example, a two-layer structure, a three-layer structure, a four-layer structure, or a five-layer structure. The inactive member 40 having a multilayer structure may include, for example, at least one adhesive layer and at least one support layer. The adhesive layer effectively prevents a gap between the cathode 10 and the electrolyte layer 30 due to a change in the volume of the cathode 10 that occurs during the charging and discharging process of an all-solid-state secondary battery 1, and provides a bonding force between the support layer and another layer, thereby improving the film strength of the inactive member 40. The support layer provides a supporting force to the inactive member 40, prevents unevenness of pressure applied to the electrolyte layer 30 during a pressing process or a charging and discharging process, and prevents the deformation of the all-solid-state secondary battery 1 to be manufactured.

The inactive member 40 is, for example, a flame-retardant inactive member. Since the flame-retardant inactive member provides flame retardancy, the possibility of thermal runaway and ignition of the all-solid-state secondary battery 1 can be prevented. As a result, the safety of the all-solid-state secondary battery 1 is further improved. Since the flame-retardant inactive member absorbs residual moisture in the all-solid-state secondary battery 1, the deterioration of the all-solid-state secondary battery 1 is prevented, and thus the lifespan characteristics of the all-solid-state secondary battery 1 are improved.

The flame-retardant inactive member includes, for example, a matrix and a filler. The matrix includes, for example, a substrate and a stiffener. The matrix includes, for example, a fibrous substrate and a fibrous stiffener. The matrix may have elasticity by including a substrate. Therefore, the matrix can effectively accommodate the volume change during charging and discharging of the all-solid-state secondary battery 1 and can be disposed at various positions. The substrate included in the matrix includes, for example, a first fibrous material. Since the substrate includes the first fibrous material, a change in the volume of the cathode 10, occurring during the charging and discharging process of the all-solid-state secondary battery 1, can be effectively accommodated, and the deformation of the inactive member 40 due to the volume change of the cathode 10 may be effectively suppressed. The first fibrous material is, for example, a material having an aspect ratio of 5 or more, 20 or more, or 50 or more. The first fibrous material is, for example, a material having an aspect ratio of 5 to 1000, 20 to 1000, or 50 to 1000. The first fibrous material is, for example, an insulating material. Since the first fibrous material is an insulating material, a short circuit between the cathode 10 and the anode 20 due to lithium dendrites, or the like, occurring during the charging and discharging process of the all-solid-state secondary battery 1, can be effectively prevented. The first fibrous material includes, for example, at least one selected from a pulp fiber, an insulating polymer fiber, and an ion-conducting polymer fiber. Since the matrix includes the stiffener, the strength of the matrix is improved. Therefore, the matrix can prevent an excessive volume change during the charging and discharging of the all-solid-state secondary battery 1 and prevent the deformation of the all-solid-state secondary battery 1. The stiffener included in the matrix includes, for example, a second fibrous material. Since the stiffener includes the second fibrous material, the strength of the matrix can be increased more uniformly. The second fibrous material is, for example, a material having an aspect ratio of 3 or more, 5 or more, or 10 or more. The second fibrous material is, for example, a material having an aspect ratio of 3 to 100, 5 to 100, or 10 to 100. The second fibrous material is, for example, a flame-retardant material. Since the second fibrous material is a flame-retardant material, ignition due to thermal runaway occurring during the charging and discharging process of the all-solid-state secondary battery 1 or due to external impact can be effectively suppressed. The second fibrous material includes, for example, a glass fiber, a metal oxide fiber, a ceramic fiber, or the like.

The flame-retardant inactive member includes a filler in addition to the matrix. The filler may be disposed within the matrix, on the surface of the matrix, or both within the matrix and on the surface of the matrix. The filler is, for example, an inorganic material. The filler included in the flame-retardant inactive member is, for example, a moisture getter. The filler removes moisture remaining in the all-solid-state secondary battery 1 by adsorbing moisture at a temperature of, for example, lower than 100°C, thereby preventing the deterioration of the all-solid-state secondary battery 1. In addition, when the temperature of the all-solid-state secondary battery 1 increases to 150°C or higher due to thermal runaway that occurs during the charging and discharging process of the all-solid-state secondary battery 1 or due to external impact, the filler can effectively suppress the ignition of the all-solid-state secondary battery 1 by desorbing the adsorbed moisture. That is, the filler is, for example, a flame retardant. The filler is, for example, a metal hydroxide having moisture adsorption properties. The metal hydroxide included in the filler is, for example, Mg(OH)₂, Fe(OH)₃, Sb(OH)₃, Sn(OH)₄, TI(OH)₃, Zr(OH)₄, Al(OH)₃, or a combination thereof. The content of the filler included in the flame-retardant inactive member is, for example, 10 to 80 parts by weight, 20 to 80 parts by weight, 30 to 80 parts by weight, 40 to 80 parts by weight, 50 to 80 parts by weight, 60 to 80 parts by weight, or 65 to 80 parts by weight, based on 100 parts by weight of the flame-retardant inactive member.

The flame retardant inactive member may further include, for example, a binder. The binder may include, for example, a curable polymer or a non-curable polymer. The curable polymer is a polymer that is cured by heat and/or pressure. The curable polymer is, for example, solid at room temperature. The flame-retardant inactive member 40 includes, for example, a heat-pressing curable film and/or a cured product thereof. The heat-pressing curable film is, for example, TSA-66 of Toray Co., Ltd.

The flame-retardant inactive member may additionally include other materials in addition to the above-described substrate, stiffener, filler, and binder. The flame-retardant inactive member may further include, for example, at least one selected from paper, an insulating polymer, an ion-conducting polymer, an insulating inorganic material, an oxide-based solid electrolyte, and a sulfide-based solid electrolyte. The insulating polymer may be an olefinic polymer such as polypropylene (PP) or polyethylene (PE).

The density of the substrate or stiffener included in the flame-retardant inactive member may be, for example, 10% to 300%, 10% to 150%, 10% to 140%, 10% to 130%, or 10% to 120% of the density of the cathode active material included in the lithium host layer 22.

The inactive member 40 is a member that does not include a material having electrochemical activity, for example, an electrode active material. The electrode active material is a material that absorbs/desorbs lithium. The inactive member 40 is a member made of a material other than an electrode active material and used in the relevant technical field.

### [All-solid-state secondary battery]

An all-solid-state secondary battery according to an embodiment includes a cathode; an anode; and an electrolyte layer disposed between the cathode and the anode. The anode includes an anode current collector and a first anode active material layer disposed on one surface of the anode current collector.

Referring to FIGS. 3 to 7, an all-solid-state secondary battery 1 includes a cathode 10; an anode 20; and an electrolyte layer 30 disposed between the cathode 10 and the anode 20. The anode 20 includes an anode current collector 21 and a first anode active material layer 22 disposed on one surface of the anode current collector 21.

### [Cathode]

Refer to the above-described cathode.

### [Anode]

### [Anode: anode active material]

Referring to FIGS. 3 to 7, the anode 20 includes a first anode active material layer 22. The first anode active material layer 22 includes, for example, an anode active material and a binder.

The anode active material included in the first anode active material layer 22 is, for example, an anode material capable of forming an alloy or compound with lithium.

The anode active material included in the first anode active material layer 22 has, for example, a particle shape. The average particle size of the anode active material having a particle shape is, for example, 4 µm or less, 3 µm or less, 2 µm or less, 1 µm or less, 500 nm or less, 300 nm or less, or 100 nm or less. The average particle size of the anode active material having a particle shape is, for example, 10 nm to 4 µm, 10 nm to 3 µm, 10 nm to 2 µm, 10 nm to 1 µm, 10 nm to 500 nm, 10 nm to 300 nm or 10 nm to 100 nm. Since the anode active material has an average particle size within this range, reversible absorption and/or desorption of lithium can be facilitated during charging and discharging. The average particle size of the anode active material is, for example, a median diameter (D50) measured using a laser particle size distribution meter.

The anode active material included in the first anode active material layer 22 includes, for example, at least one selected from a carbon-based anode active material and a metal or metalloid anode active material.

The carbon-based anode active material includes, for example, amorphous carbon, crystalline carbon, porous carbon, or a combination thereof.

The carbon-based anode active material is, particularly, amorphous carbon. The amorphous carbon may be, but is not limited to, carbon black (CB), acetylene black (AB), furnace black (FB), ketjen black (KB), and graphene, and any material classified as amorphous carbon in the relevant technical field may be used. The amorphous carbon is carbon that has no crystallinity or very low crystallinity and is distinguished from crystalline carbon or graphitic carbon.

The carbon-based anode active material may be, for example, porous carbon. The pore volume of pores included in the porous carbon is, for example, 0.1 cc/g to 10.0 cc/g, 0.5 cc/g to 5 cc/g, or 0.1 cc/g to 1 cc/g. The average pore diameter of pores included in the porous carbon is, for example, 1 nm to 50 nm, 1 nm to 30 nm, or 1 nm to 10 nm. The BET specific surface area of the porous carbon is, for example, 100 m2/g to 3000 m2/g.

The metal or metalloid anode active material includes, but is not necessarily limited to, at least one selected from the group consisting of gold (Au), platinum (Pt), palladium (Pd), silicon (Si), silver (Ag), aluminum (Al), bismuth (Bi), tin (Sn), and zinc (Zn), and any metal or metalloid anode active material that forms an alloy or compound with lithium in the relevant technical field may be used. For example, nickel (Ni) does not form an alloy with lithium and is therefore not a metal anode active material.

The first anode active material layer 22 includes a type of anode active material among these anode active materials or a mixture of a plurality of different anode active materials. For example, the first anode active material layer 22 includes only amorphous carbon, or includes at least one selected from the group consisting of gold (Au), platinum (Pt), palladium (Pd), silicon (Si), silver (Ag), aluminum (Al), bismuth (Bi), tin (Sn), and zinc (Zn). Alternatively, the first anode active material layer 22 includes a mixture of amorphous carbon and at least one selected from the group consisting of gold (Au), platinum (Pt), palladium (Pd), silicon (Si), silver (Ag), aluminum (Al), bismuth (Bi), tin (Sn), and zinc (Zn). The mixing ratio of the mixture of amorphous carbon and gold, etc., is, for example, 99:1 to 1:99, 10:1 to 1:2, 5:1 to 1:1, or 4:1 to 2:1 by weight ratio, but is not necessarily limited to this range and is selected according to the characteristics of the required all-solid-state secondary battery 1. Since the anode active material has this composition, the cycle characteristics of the all-solid-state secondary battery 1 are further improved.

The anode active material included in the first anode active material layer 22 includes, for example, a mixture of first particles made of amorphous carbon and second particles made of a metal or metalloid. The metal or metalloid includes, for example, gold (Au), platinum (Pt), palladium (Pd), silicon (Si), silver (Ag), aluminum (Al), bismuth (Bi), tin (Sn), and zinc (Zn). The metalloid, alternatively, is a semiconductor. The content of the second particles is 1 to 99 wt%, 1 to 60 wt%, 8 to 60 wt%, 10 to 50 wt%, 15 to 40 wt%, or 20 to 30 wt% based on the total weight of the mixture. Since the second particles have a content within this range, the cycle characteristics of the all-solid-state secondary battery 1 are further improved.

Alternatively, the first anode active material layer 22 includes a composite anode active material. The composite anode active material may include, for example, a carbon-based support and a metal-based anode active material supported on the carbon-based support. Since the composite anode active material has this structure, the localization of the metal-based anode active material in the first anode active material layer can be prevented, and a uniform distribution can be obtained. As a result, the cycle characteristics of the all-solid-state secondary battery 1 including the first anode active material layer 22 are further improved.

The metal-based anode active material supported on the carbon-based support includes, for example, a metal, a metal oxide, a composite of a metal and a metal oxide, or a combination thereof. The metal includes, for example, gold (Au), platinum (Pt), palladium (Pd), silicon (Si), silver (Ag), aluminum (Al), bismuth (Bi), tin (Sn), tellurium (Te), and zinc (Zn). The metal oxide includes, for example, gold (Au) oxide, platinum (Pt) oxide, palladium (Pd) oxide, silicon (Si) oxide, silver (Ag) oxide, aluminum (Al) oxide, bismuth (Bi) oxide, tin (Sn) oxide, tellurium (Te) oxide, and zinc (Zn) oxide. The metal oxide may include, for example, AuₓO_{y} (0<x≤2, 0<y≤3), PtₓO_{y} (0<x≤1, 0<y≤2), PdₓO_{y} (0<x≤1, 0<y≤1), SiₓO_{y} (0<x≤1, 0<y≤2), AgₓO_{y} (0<x≤2, 0<y≤1), AlₓO_{y} (0<x≤2, 0<y≤3), BiₓO_{y} (0<x≤2, 0<y≤3), SnₓO_{y} (0<x≤1, 0<y≤2), TeₓO_{y} (0<x≤1, 0<y≤3), ZnₓO_{y} (0<x≤1, 0<y≤1), or a combination thereof. The composite of the metal and the metal oxide may include, for example, a composite of Au and AuₓO_{y} (0<x≤2, 0<y≤3), a composite of Pt and PtₓO_{y} (0<x≤1, 0<y≤2), a composite of Pd and PdₓO_{y} (0<x≤1, 0<y≤1), a composite of Si and SiₓO_{y} (0<x≤1, 0<y≤2), a composite of Ag and AgₓO_{y} (0<x≤2, 0<y≤1), a composite of Al and AlₓO_{y} (0<x≤2, 0<y≤3), a composite of Bi and BiₓO_{y} (0<x≤2, 0<y≤3), a composite of Sn and SnₓO_{y} (0<x≤1, 0<y≤2), a composite of Te and TeₓO_{y} (0<x≤1, 0<y≤3), a composite of Zn and ZnₓO_{y} (0<x≤1, 0<y≤1), or a combination of thereof.

The carbon-based support is, for example, amorphous carbon. The amorphous carbon may be, but is not limited to, carbon black (CB), acetylene black (AB), furnace black (FB), ketjen black (KB), graphene, activated carbon, carbon nanofibers (CNF), and carbon nanotubes (CNT), and any material classified as amorphous carbon in the relevant technical field may be used. The amorphous carbon is carbon that has no crystallinity or very low crystallinity and is distinguished from crystalline carbon or graphitic carbon. Carbonaceous materials are, for example, carbon-based anode active materials.

The composite anode active material has, for example, a particle shape. The particle size of the composite anode active material having a particle shape is, for example, 10 nm to 4 µm, 10 nm to 1 µm, 10 nm to 500 nm, 10 nm to 200 nm, or 10 nm to 100 nm. Since the composite anode active material has a particle size within this range, reversible absorption and/or desorption of lithium can be facilitated during charging and discharging. The metal-based anode active material supported on the support may have, for example, a particle shape. The particle size of the metal-based anode active material may be, for example, 1 nm to 200 nm, 1 nm to 150 nm, 5 nm to 100 nm, or 10 nm to 50 nm. The carbon-based support may, for example, have a particle shape. The particle size of the carbon-based support may be, for example, 10 nm to 2 µm, 10 nm to 1 µm, 10 nm to 500 nm, 10 nm to 200 nm or 10 nm to 100 nm. Since the carbon-based support has a particle size within this range, it can be more uniformly disposed within the first anode active material layer. The carbon-based support may be, for example, a nanoparticle having a particle size of 500 nm or less. The particle size of the composite anode active material, the particle size of the metal-based anode active material, and the particle size of the carbon-based support are, for example, average particle sizes. The average particle size is, for example, a median diameter (D50) measured using a laser particle size distribution meter. Alternatively, the average particle size may be determined automatically using software from electron microscope images, or may be determined manually by hand.

### [Anode: binder]

The binder included in the first anode active material layer 22 may be, but is not necessarily limited to, for example, styrene-butadiene rubber (SBR), polytetrafluoroethylene, polyvinylidene fluoride, polyethylene, vinylidene fluoride/hexafluoropropylene copolymer, polyacrylonitrile, or polymethyl methacrylate, and any binder used in the relevant technical field may be used. The binder may consist of a single binder or a plurality of different binders.

Since the first anode active material layer 22 includes the binder, the first anode active material layer 22 is stabilized on the anode current collector 21. In addition, cracks of the first anode active material layer 22 are suppressed despite changes in the volume and/or relative position of the first anode active material layer 22 during a charging and discharging process. For example, when the first anode active material layer 22 does not include the binder, it is possible for the first anode active material layer 22 to be easily separated from the anode current collector 21. As the first anode active material layer 22 is detached from the anode current collector 21, the possibility of a short circuit occurring increases when the anode current collector 21 comes into contact with the electrolyte layer 30 at the exposed portion of the anode current collector 21. The first anode active material layer 22 is prepared by, for example, applying a slurry, in which materials constituting the first anode active material layer 22 are dispersed, onto the anode current collector 21 and drying the applied slurry. Stable dispersion of the anode active material in the slurry is possible by including a binder in the first anode active material layer 22. For example, when applying the slurry onto the anode current collector 21 by screen printing, it is possible to suppress the clogging of a screen (e.g., clogging of the anode active material by aggregates).

### [Anode: other additives]

The first anode active material layer 22 may further include additives used in a conventional all-solid-state secondary batteries 1, such as a filler, a coating agent, a dispersant, and an ion conductive aid.

### [Anode: solid electrolyte]

The first anode active material layer 22 may further include a solid electrolyte. The solid electrolyte may be, for example, a material selected from the solid electrolytes included in the electrolyte layer 30. The solid electrolyte included in the first anode active material layer 22 may act as a reaction point where the formation of lithium metal begins in the first anode active material layer 22, a space where the formed lithium metal is stored, or a path for transferring lithium ions. The solid electrolyte may be omitted.

In the first anode active material layer 22, the content of the solid electrolyte may be high in a region adjacent to the electrolyte layer 30 and may be low in a region adjacent to the anode current collector 21. In the first anode active material layer 22, the solid electrolyte may have a concentration gradient in which the concentration of the solid electrolyte decreases from a region adjacent to the electrolyte layer 30 to a region adjacent to the anode current collector 21.

### [Anode: first anode active material layer]

The ratio (B/A) of the initial charge capacity (B) of the first anode active material layer 22 to the initial charge capacity (A) of the cathode active material layer is, for example, 0.005 to 0.45. The initial charge capacity of the anode active material layer 12 is determined at a maximum charge voltage for Li/Li+ from a 1st open circuit voltage. The initial charge capacity of the first anode active material layer 22 is determined at a voltage of 0.01 V for Li/Li+ from a 2nd open circuit voltage.

The maximum charge voltage is determined by the type of a cathode active material. The maximum charge voltage may be, for example, 1.5 V, 2.0 V, 2.5 V, 3.0 V, 3.5 V, 4.0 V, 4.2 V, or 4.3 V. For example, the maximum charge voltage of Li₂S or a Li₂S composite may be 2.5 V for Li/Li+. For example, the maximum charge voltage of Li₂S or a Li₂S composite may be 3.0 V for Li/Li+. The ratio (B/A) of the initial charge capacity (B) of the first anode active material layer 22 to the initial charge capacity (A) of the cathode active material layer is, for example, 0.01 to 0.3, 0.01 to 0.2, or 0.05 to 0.1. The initial charge capacity (mAh) of the cathode active material layer 12 is obtained by multiplying the charge capacity density (charge specific capacity) (mAh/g) of the cathode active material by the mass (g) of the cathode active material in the cathode active material layer 12. When several types of cathode active materials are used, values of charge capacity density x mass is calculated for all cathode active materials, and the sum of these values is an initial charge capacity of the cathode active material layer 12. The initial charge capacity of the first anode active material layer 22 is also calculated in the same way. The initial charge capacity of the first anode active material layer 22 is obtained by multiplying the charge capacity density (mAh/g) of the anode active material by the mass of the anode active material in the first anode active material layer 22. When several types of anode active materials are used, values of charge capacity density x mass is calculated for all anode active materials, and the sum of these values is an initial charge capacity of the anode active material layer 22. The charge capacity density of each of the cathode active materials and anode active materials may be measured by using an all-solid-state half-cell using lithium metal as a counter electrode.

The initial charge capacity of each of the cathode active material layer 12 and the first anode active material layer 22 may be directly measured using an all-solid-state half-cell at a constant current density of, for example, 0.1 mA/cm2. For the cathode, the measurements may be performed for an operating voltage from the first open circuit voltage (OCV) to the maximum charge voltage, for example, 3.0 V (vs. Li/Li+). For the anode, the measurements may be performed for an operating voltage from the second open circuit voltage (OCV) to a voltage of 0.01 V for the anode, for example, lithium metal. For example, the all-solid-state half-cell having the cathode active material layer may be charged from the first open circuit voltage to 3.0 V with a constant current of 0.1 mA/cm2, and the all-solid-state half-cell having the first anode active material layer may be charged from the second open circuit voltage to 0.01 V with a constant current of 0.1 mA/cm2. The current density during constant current charging may be, for example, 0.2 mA/cm2 or 0.5 mA/cm2. The all-solid-state half-cell having the cathode active material layer may be charged from the first open circuit voltage to 2.5 V, 2.0 V, 2.5 V, 2.8 V, 3.0 V, 3.5 V, or 4.0 V. The maximum charge voltage of the cathode active material layer may be determined by the maximum voltage of the battery satisfying the safety conditions according to JISC8712:2015 of the Japanese Standards Association.

When the initial charge capacity of the first anode active material layer 22 is too small, the thickness of the first anode active material layer 22 becomes very thin, so that lithium dendrites formed between the first anode active material layer 22 and the anode current collector 21 during repeated charging and discharging processes collapse the first anode active material layer 22, thus making it difficult to improve the cycle characteristics of the all-solid-state secondary battery 1. When the charge capacity of the first anode active material layer 22 increases excessively, the energy density of the all-solid-state secondary battery 1 decreases and the internal resistance of the all-solid-state secondary battery 1 due to the first anode active material layer 22 increases, thus making it difficult to improve the cycle characteristics of the all-solid-state secondary battery 1.

The thickness of the first anode active material layer 22 is, for example, 50% or less, 40% or less, 30% or less, 20% or less, 10% or less, or 5% or less of the thickness of the cathode active material layer 12. The thickness of the first anode active material layer 22 is, for example, 1 to 50 %, 1 to 40 %, 1 to 30 %, 1 to 20 %, 1 to 10 %, or 1 to 5 % of the thickness of the cathode active material layer 12. The thickness of the first anode active material layer 22 is, for example, 1 µm to 20 µm, 2 µm to 15 µm, or 3 µm to 10 µm. When the thickness of the first anode active material layer 22 is too thin, lithium dendrites formed between the first anode active material layer 22 and the anode current collector 21 collapse the first anode active material layer 22, thus making it difficult to improve the cycle characteristics of the all-solid-state secondary battery 1. When the thickness of the first anode active material layer 22 increases excessively, the energy density of the all-solid-state secondary battery 1 decreases and the internal resistance of the all-solid-state secondary battery 1 due to the first anode active material layer 22 increases, thus making it difficult to improve the cycle characteristics of the all-solid-state secondary battery 1. When the thickness of the first anode active material layer 22 decreases, for example, the initial charge capacity of the first anode active material layer 22 also decreases.

### [Anode: second anode active material layer]

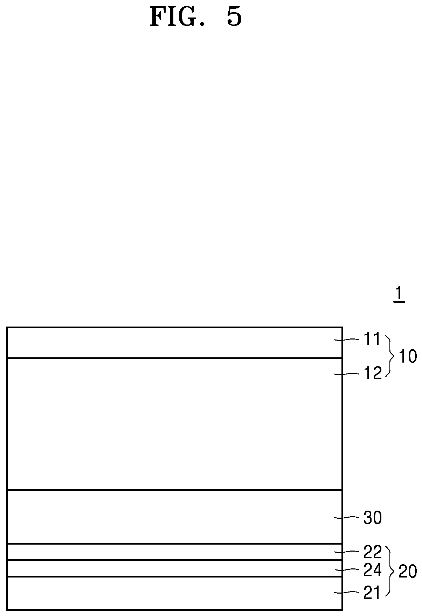

Referring to FIG.5, the all-solid-state secondary battery 1 further includes, for example, a second anode active material layer 24 disposed between the anode current collector 21 and the first anode active material layer 22, after being charged. The second anode active material layer 24 is a metal layer including lithium or a lithium alloy. The metal layer includes lithium or a lithium alloy. Therefore, the second anode active material layer is a metal layer including lithium and thus acts as a lithium reservoir. The lithium alloy may be, but is not limited to, a Li-Al alloy, a Li-Sn alloy, a Li-In alloy, a Li-Ag alloy, a Li-Au alloy, a Li-Zn alloy, a Li-Ge alloy, or a Li-Si alloy, and any lithium alloy used in the relevant technical field may be used. The second anode active material layer 24 may be composed of one of these alloys or of lithium, or may be composed of several types of alloys. The second anode active material layer 24 is, for example, a plated layer. The second anode active material layer 24 is deposited between the first anode active material layer 22 and the anode current collector 21 during the charging process of the all-solid-state secondary battery 1.

The thickness of the second negative electrode active material layer 24 is, but is not particularly limited, for example, 1 µm to 500 µm, 1 µm to 200 µm, 1 µm to 150 µm, 1 µm to 100 µm, or 1 µm to 50 µm. When the thickness of the second anode active material layer 24 is too thin, it is difficult for the second anode active material layer 24 to act as a lithium reservoir. When the thickness of the second anode active material layer 24 is too thick, the mass and volume of the all-solid-state secondary battery 1 may increase, and the cycle characteristics of the all-solid-state secondary battery 1 may rather deteriorate.

Alternatively, in the all-solid-state secondary battery 1, the second anode active material layer 24 may be disposed between the anode current collector 21 and the first anode active material layer 22 before assembling the all-solid-state secondary battery 1. When the second anode active material layer 24 is disposed between the anode current collector 21 and the first anode active material layer 22 before assembling the all-solid-state secondary battery 1, the second anode active material layer 24 acts as a lithium reservoir because it is a metal layer including lithium. For example, lithium foil may be disposed between the anode current collector 21 and the first anode active material layer 22 before assembling the all-solid-state secondary battery 1.

When the second anode active material layer 24 is deposited by charging after assembling the all-solid-state secondary battery 1, the energy density of the all-solid-state secondary battery 1 increases because the second anode active material layer 24 is not included during the assembling of the all-solid-state secondary battery 1. When charging the all-solid-state secondary battery 1, the charging is performed in excess of the charge capacity of the first anode active material layer 22. That is, the first anode active material layer 22 is overcharged. During the initial stage of charging, lithium is absorbed into the first anode active material layer 22. The anode active material included in the first cathode active material layer 22 forms an alloy or compound with the lithium ions that have moved from the cathode 10. When charging exceeds the capacity of the first anode active material layer 22, for example, lithium is deposited on the back surface of the first anode active material layer 22, that is, between the anode current collector 21 and the first anode active material layer 22, and a metal layer corresponding to the second anode active material layer 24 is formed by the deposited lithium. The second anode active material layer 24 is a metal layer mainly including lithium (i.e., metal lithium). These results are obtained because the anode active material included in the first anode active material layer 22 includes a material that forms an alloy or compound with lithium. During discharging, lithium in the first anode active material layer 22 and the second anode active material layer 24, that is, the metal layer, is ionized and moves toward the cathode 10. Therefore, it is possible to use lithium as an anode active material in the all-solid-state secondary battery 1. In addition, since the first anode active material layer 22 covers the second anode active material layer 24, it acts as a protective layer for the second anode active material layer 24, that is, the metal layer, and at the same time, serves to suppress the deposition and growth of lithium dendrites. Therefore, the short circuit and capacity reduction of the all-solid-state secondary battery 1 are suppressed, and as a result, the cycle characteristics of the all-solid-state secondary battery 1 are improved. In addition, when the second anode active material layer 24 is disposed by charging after assembling the all-solid-state secondary battery 1, the anode 20, that is, the anode current collector 21 and the first anode active material layer 22, and the region therebetween, are Li-free regions that do not include lithium (Li) in the initial state of the all-solid-state secondary battery 1 or in the state after complete discharging.

### [Anode: anode current collector]

The anode current collector 21 is composed of, for example, a material that does not react with lithium, that is, does not form both an alloy and a compound. Examples of the material constituting the anode collector 21 include, but are not necessarily limited to, copper (Cu), stainless steel, titanium (Ti), iron (Fe), cobalt (Co), and nickel (Ni), and any material that can be used as an electrode collector in the relevant technical field may be used. The anode current collector 21 may be composed of one of the above-described metals, or may be composed of an alloy or coating material of two or more of the above-described metals. The anode collector 21 has, for example, a shape of a plate or a foil.

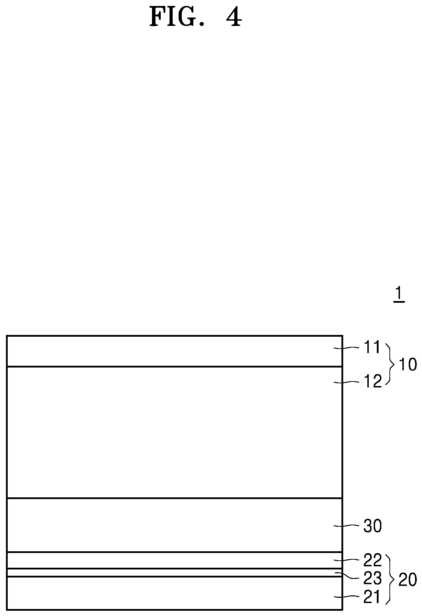

Referring to FIG. 4, the all-solid-state secondary battery 1 may further include, for example, a thin film 23 including an element capable of forming an alloy with lithium on one surface of the anode current collector 21. The thin film 23 is disposed between the anode current collector 21 and the first anode active material layer 22. The thin film 23 includes, for example, an element capable of forming an alloy with lithium. The element capable of forming an alloy with lithium may be, but is not necessarily limited to, gold, silver, zinc, tin, indium, silicon, aluminum, or bismuth, and any element capable of forming an alloy with lithium in the relevant technical field may be used. The thin film 23 may be composed of one of these metals or may composed of an alloy of several types of metals. Since the thin film 23 is disposed on one surface of the anode current collector 21, for example, the deposition shape of the second anode active material layer 24 deposited between the thin film 23 and the first anode active material layer 22 becomes flatter, and thus the cycle characteristics of the all-solid-state secondary battery 1 can be further improved.

The thickness of the thin film 23 is, for example, 1 nm to 800 nm, 10 nm to 700 nm, 50 nm to 600 nm, or 100 nm to 500 nm. When the thickness of the thin film 23 is less than 1 nm, it may be difficult for the thin film 23 to perform its function. When the thickness of the thin film 23 is too thick, the thin film 23 itself absorbs lithium, so that the deposition amount of lithium in the anode may be reduced, the energy density of the all-solid-state battery may be reduced, and the cycle characteristics of the all-solid-state secondary battery 1 may be deteriorated. The thin film 23 may be formed on the anode current collector 21 by, for example, a vacuum deposition method, a sputtering method, a plating method, or the like, but the disclosure is not necessarily limited to these methods, and any method capable of forming the thin film 23 in the relevant technical field is possible.

Although not shown in the drawings, the anode current collector 21 may include, for example, a base film and a metal layer disposed on one or both surfaces of the base film. The base film may include, for example, a polymer. The polymer may be, for example, a thermoplastic polymer. The polymer may include, for example, polyethylene terephthalate (PET), polyethylene (PE), polypropylene (PP), polybutylene terephthalate (PBT), polyimide (PI), or a combination thereof. The polymer may be an insulating polymer. Since the base film includes an insulating thermoplastic polymer, when a short circuit occurs, the base film softens or liquefies, thereby blocking battery operation and suppressing a rapid increase in current. The metal layer may include, for example, copper (Cu), stainless steel, titanium (Ti), iron (Fe), cobalt (Co), nickel (Ni), or an alloy thereof. The anode current collector 21 may additionally include a metal chip and/or a lead tab. For more specific details on the base film, metal layer, metal chip, and lead tab of the anode current collector 21, refer to the above-described cathode current collector 11. Since the anode current collector 21 has this structure, the weight of the anode may be reduced, and as a result, the energy density of the anode and the lithium battery may be improved.

### [Electrolyte layer]

### [Electrolyte layer: electrolyte]

Referring to FIGS. 3 to 7, the electrolyte layer 30 includes an electrolyte disposed between the cathode 10 and the anode 20. The electrolyte layer may include, for example, a solid electrolyte, a gel electrolyte, or a combination thereof.

The solid electrolyte may include, for example, a sulfide-based solid electrolyte, an oxide-based solid electrolyte, a polymer solid electrolyte, or a combination thereof.

The solid electrolyte is, for example, a sulfide-based solid electrolyte. The sulfide-based solid electrolyte is, for example, at least one selected from Li₂S-P₂S₅, Li₂S-P₂S₅-LiX (where X is a halogen element), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (where m and n are positive numbers, and Z is one of Ge, Zn, and Ga), Li₂S-GeS₂, Li₂S-SiS₂-Li₃PO₄, Li₂S-SiS₂-LiₚMO_{q} (where p and q are positive numbers, and M is one of P, Si, Ge, B, Al, Ga, and In), Li₇₋ₓPS₆₋ₓClₓ (0≤x≤2), Li₇₋ₓPS₆₋ₓBrₓ (0≤x≤2), and Li₇₋ₓPS₆₋ₓIₓ, (0≤x≤2). The sulfide-based solid electrolyte is prepared by treating starting materials such as Li₂S and P₂S₅ using a melt quenching method or a mechanical milling method. After this treatment, heat treatment may be performed. The solid electrolyte may be amorphous, crystalline, or a mixed state thereof. In addition, the solid electrolyte may include, for example, sulfur (S), phosphorus (P), and lithium (Li) as at least constituent elements among the above-described sulfide-based solid electrolyte materials. For example, the solid electrolyte may be a material including Li₂S-P₂S₅. When using a sulfide-based solid electrolyte material including Li₂S-P₂S₅ for forming the solid electrolyte, the mixed molar ratio of Li₂S and P₂S₅ is, for example, in the range of Li₂S: P₂S₅ = 20:80 to 90:10, 25:75 to 90:10, 30:70 to 70:30, 40:60 to 60:40.

The sulfide-based solid electrolyte may include, for example, an argyrodite type solid electrolyte represented by Formula 1 below.

<Formula 1> Li⁺₁₂₋ₙ₋ₓAⁿ⁺X²⁻₆₋ₓY⁻ₓ

In the Formula, A is P, As, Ge, Ga, Sb, Si, Sn, Al, In, Ti, V, Nb, or Ta, X is S, Se, or Te, Y is Cl, Br, I, F, CN, OCN, SCN, or N₃, and 1≤n≤5, 0≤x≤2. The sulfide-based solid electrolyte may be, for example, an argyrodite-type compound including at least one selected from Li₇₋ₓPS₆₋ₓClₓ, 0≤x≤2, Li₇₋ₓPS₆₋ₓBrₓ, 0≤x≤2, and Li₇₋ₓPS₆₋ₓIₓ, 0≤x≤2. The sulfide-based solid electrolyte may be, for example, an argyrodite-type compound including at least one selected from Li₆PS₅Cl, Li₆PS₅Br, and Li₆PS₅I.

The density of the argyrodite-type solid electrolyte may be 1.5 to 2.0 g/cc. Since the argyrodite-type solid electrolyte has a density of 1.5 g/cc or more, the internal resistance of an all-solid-state secondary battery is reduced, and the penetration of the electrolyte layer by Li can be effectively suppressed.

The oxide-based solid electrolyte may be, for example, Li_{1+x+y}AlₓTi₂₋ₓSi_{y}P_{3-y}O₁₂ (0<x<2, 0≤y<3), BaTiO₃, Pb(Zr,Ti)O₃(PZT), Pb₁₋ₓLaₓZr_{1-y}Ti_{y}O₃(PLZT)(0≤x<1, 0≤y<1), PB(Mg₃Nb_{2/3})O₃-PbTiO₃(PMN-PT), HfO₂, SrTiO₃, SnO₂, CeO₂, Na₂O, MgO, NiO, CaO, BaO, ZnO, ZrO₂, Y₂O₃, Al₂O₃, TiO₂, SiO₂, Li₃PO₄, LiₓTi_{y}(PO₄)₃(0<x<2, 0<y<3), LiₓAl_{y}Ti_{z}(PO₄)₃ (0<x<2, 0<y<1, 0<z<3), Li_{1+x+y}(Al, Ga)ₓ(Ti, Ge)₂₋ₓSi_{y}P_{3-y}O₁₂(0≤x≤1 0≤y≤1), LiₓLa_{y}TiO₃ (0<x<2, 0<y<3), Li₂O, LiOH, Li₂CO₃, LiAlO₂, Li₂O-Al₂O₃-SiO₂-P₂O₅-TiO₂-GeO₂, Li₃₊ₓLa₃M₂O₁₂(M = Te, Nb, or Zr, 0≤x≤10), or a combination thereof. The oxide-based solid electrolyte is prepared, for example, by a sintering method or the like.

The oxide-based solid electrolyte is, for example, a garnet-type solid electrolyte selected from Li₇La₃Zr₂O₁₂ (LLZO) and Li₃₊ₓLa₃Zr₂₋ₐMₐO₁₂ (M doped LLZO, M=Ga, W, Nb, Ta, or Al, 0<a<2, 0≤x≤10).

The polymer solid electrolyte is an electrolyte that includes a mixture of a lithium salt and a polymer or includes a polymer having an ion-conducting functional group. The polymer solid electrolyte may be, for example, a polymer electrolyte that is in a solid state at 25°C and 1 atm. The polymer solid electrolyte may not include liquid. The polymer solid electrolyte includes a polymer, and the polymer may be, but is not limited to, for example, polyethylene oxide (PEO), polyvinylidene fluoride (PVDF), vinylidene fluoride-hexafluoropropylene (PVDF-HFP), polyethylene oxide (PEO), poly(styrene-b-ethylene oxide) block copolymer (PS-PEO), poly(styrene-butadiene), poly(styrene-isoprene-styrene), poly(styrene-b-divinylbenzene) block copolymer, poly(styrene-ethylene oxide-styrene) block copolymer, polystyrene sulfonate (PSS), polyvinyl fluoride (PVF), polymethyl methacrylate (PMMA), poly(methylmethacrylate), polyethylene glycol (PEG), polyacrylonitrile (PAN), polytetrafluoroethylene (PTFE), polyethylenedioxythiophene (PEDOT), polypyrrole (PPY), polyacrylonitrile (PAN), polyaniline, polyacetylene, Nafion, Aquivion, Flemion, Gore, Aciplex, Morgane ADP, sulfonated poly(ether ether ketone) (SPEEK), sulfonated poly(arylene ether ketone ketone sulfone) (PAEKKS), sulfonated poly(aryl ether ketone) (SPAEK), poly[bis(benzimidazobenzisoquinolinones)] (SPBIBI), poly(styrene sulfonate) (PSS), lithium 9,10-diphenylatlacene-2-sulfonate 9,10-diphenylanthracene-2-sulfonate (DPASLi+), or a combination thereof, and any material that is used as a plolymer electrolyte in the relevant technical field may be used. Any lithium salt that can be used as a lithium salt in the relevant technical field may be used. The lithium salt is, for example, LiPF₆, LiBF₄, LiSbF₆, LiAsF₆, LiClO₄, LiCF₃SO₃, Li(CF₃SO₂)₂N, LiC₄F₉SO₃, LiAlO₂, LiAlCl₄, LiN(CₓF₂ₓ₊₁SO₂)(C_{y}F_{2y+1}SO₂) (x and y are each 1 to 20), LiCl, LiI, or a mixture thereof. The polymer included in the polymer solid electrolyte may be, for example, a compound including 10 or more, 20 or more, 50 or more, or 100 or more repeating units. The weight average molecular weight of the polymer included in the polymer solid electrolyte may be, for example, 1000 Dalton or more, 10,000 Dalton or more, 100,000 Dalton or more, or 1,000,000 Dalton or more.

The gel electrolyte is, for example, a gel polymer electrolyte. The gel electrolyte may have a gel state without including a polymer.

The gel polymer electrolyte may include a liquid electrolyte and a polymer or may include an organic solvent and a polymer having an ion-conducting functional group. The polymer gel electrolyte may be, for example, a polymer electrolyte that is in a gel state at 25°C and 1 atm. The polymer gel electrolyte may have a gel state without including liquid. The liquid electrolyte used in the polymer gel electrolyte may be, for example, an ionic liquid, a mixture of a lithium salt and an organic solvent, a mixture of an ionic liquid and an organic solvent, or a mixture of a lithium salt, an ionic liquid, and an organic solvent. The polymer used in the polymer gel electrolyte may be selected from the polymers used in the solid polymer electrolyte. The organic solvent may be selected from the organic solvents used in the liquid electrolyte. The lithium salt may be selected from the lithium salts used in the solid polymer electrolyte. The ionic liquid is a salt that is liquid at room temperature or molten at room temperature and is composed only of ions and has a melting point of room temperature or lower. The ionic liquid may include at least one selected from compounds including, for example, a) at least one cation selected from ammonium, pyrrolidinium, pyridinium, pyrimidinium, imidazolium, piperidinium, pyrazolium, oxazolium, pyridazinium, phosphonium, sulfonium, triazolium, and mixtures thereof, and b) at least one anion selected from BF₄-, PF₆-, AsF₆-, SbF₆-, AlCl₄-, HSO₄-, ClO₄-, CH₃SO₃-, CF3CO2-, Cl-, Br-, I-, BF₄-, SO₄-, CF₃SO₃-, (FSO₂)₂N-, (C₂F₅SO₂)₂N-, (C₂F₅SO₂)(CF₃SO₂)N-, and (CF₃SO₂)₂N-. The polymer solid electrolyte may be impregnated into an electrolyte solution in a lithium battery to form a gel polymer electrolyte. The polymer gel electrolyte may further include inorganic particles. The polymer included in the polymer gel electrolyte may be, for example, a compound including 10 or more, 20 or more, 50 or more, or 100 or more repeating units. The weight average molecular weight of the polymer included in the polymer gel electrolyte may be, for example, 500 Dalton or more, 1000 Dalton or more, 10,000 Dalton or more, 100,000 Dalton or more, or 1,000,000 Dalton or more.

### [Electrolyte layer: binder]

The electrolyte layer 30 may include, for example, a binder. The binder included in the electrolyte layer 30 may be, but is not limited to, styrene butadiene rubber (SBR), polytetrafluoroethylene, polyvinylidene fluoride, or polyethylene, and any binder used in the relevant technical field may be used. The binder of the electrolyte layer 30 may be the same as or different from the binder included in the cathode active material layer 12 and the anode active material layer 22. The binder may be omitted.

The content of the binder included in the electrolyte layer 30 is 0.1 to 10 wt%, 0.1 to 5 wt%, 0.1 to 3 wt%, 0.1 to 1 wt%, 0 to 0.5 wt%, or 0 to 0.1 wt% with respect to the total weight of the electrolyte layer 30.

### Mode for the Invention

Hereinafter, the present inventive concept will be described in more detail through examples and comparative examples. However, these examples are intended to illustrate the present inventive concept, and the scope of the present inventive concept is not limited to these examples.

### (Preparation of composite cathode active material)

### Example 1: Li₂S-LiI-CNF, 2 steps, 10 hr + 6 hr, 600 rpm, 28 G

### (First step)

Li₂S and LiI were mixed at a weight ratio of 30:20. The mixture was mechanically milled using a ball mill to prepare a Li₂S-LiI composite. Milling conditions were 25 °C, 600 rpm for 10 hours. The milling energy applied to the sample during milling was 28 G.

### (Second step)

The Li₂S-LiI composite and carbon nanofibers (CNF) were mixed at a weight ratio of 50:10. The mixture was mechanically milled using a ball mill to prepare a Li₂S-LiI-CNF composite. Milling conditions were 25 °C, 600 rpm for 6 hours. The milling energy applied to the sample during milling was 28 G. The Li₂S-LiI-CNF composite was used as a composite cathode active material.

The Mohs hardness of Li₂S was 0.6, the Mohs hardness of LiI was 2.0, and the Mohs hardness of carbon nanofiber (CNF) was 1.5.

### Example 2: Li₂S-LiI-CNF, 2 steps, 10 hr + 3 hr, 600 rpm, 28 G

A Li₂S-LiI-CNF composite was prepared in the same manner as in Example 1, except that the milling time in the second step was changed to 3 hours.

### Example 3: Li₂S-LiI-CNF, 2 steps, 10 hr + 2 hr, 600 rpm, 28 G

A Li₂S-LiI-CNF composite was prepared in the same manner as in Example 1, except that the milling time in the second step was changed to 2 hours.

### Example 4: Li₂S-LiI-CNF, 2 steps, 10 hr + 8 hr, 600 rpm, 28 G

A Li₂S-LiI-CNF composite was prepared in the same manner as in Example 1, except that the milling time in the second step was changed to 8 hours.

### Comparative Example 1: Li₂S-LiI-CNF, 2 steps, 10 hr + 1 hr, 600 rpm, 28 G

A Li₂S-LiI-CNF composite was prepared in the same manner as in Example 1, except that the milling time in the second step was changed to 1 hour.

### Comparative Example 2: Li₂S-LiI-CNF, 2 steps, 10 hr + 10 hr, 600 rpm, 28 G

A Li₂S-LiI-CNF composite was prepared in the same manner as in Example 1, except that the milling time in the second step was changed to 10 hours.

### Comparative Example 3: Li₂S-LiI-CNF, 2 steps, 10 hr + 10 hr, 510 rpm, 20 G

### (First step)

Li₂S and LiI were mixed at a weight ratio of 30:20 to prepare a first mixture. The first mixture was mechanically milled using a ball mill to prepare a Li₂S-LiI composite.

Milling conditions were 25 °C, 510 rpm for 10 hours. The milling energy applied to the sample during milling was 20 G.

### (Second step)

The Li₂S-LiI composite and carbon nanofibers (CNF) were mixed at a weight ratio of 50:10 to prepare a second mixture. The second mixture was mechanically milled using a ball mill to prepare a Li₂S-LiI-CNF composite.

Milling conditions were 25 °C, 510 rpm for 10 hours. The milling energy applied to the sample during milling was 20 G. The Li₂S-LiI-CNF composite was used as a composite cathode active material.

### Comparative Example 4: Li₂S-LiI-CNF, 2 steps, 10 hr + 10 hr, 300 rpm, 7 G

A Li₂S-LiI-CNF composite was prepared in the same manner as in Example 1, except that in the first and second steps, the rotation speed was decreased to 300 rpm and the milling energy was changed to 7 G.

### Comparative Example 5: Li₂S-LiI-CNF, 2 steps, 10 hr + 10 hr, 700 rpm, 38 G

A Li₂S-LiI-CNF composite was prepared in the same manner as in Example 1, except that in the first and second steps, the rotation speed was increased to 700 rpm and the milling energy was changed to 38 G.

### Comparative Example 6: Simple mixture of Li₂S and CNF

Li₂S and carbon nanofiber (CNF) were mixed at a weight ratio of 30:30. The mixture was directly used as a cathode active material.

### Comparative Example 7: Li₂S-CNF, 1 step, 2 hr, 600 rpm, 28 G

Li₂S and carbon nanofiber (CNF) were mixed at a weight ratio of 30:30. The mixture was mechanically milled using a ball mill to prepare a Li₂S-CNF composite. Milling conditions were 25 °C, 600 rpm for 2 hours. The milling energy applied to the sample during milling was 28 G. The Li₂S-CNF composite was used as a composite cathode active material.

### Comparative Example 8: Li₂S-CNF-Lil, 2 steps, 10 hr + 10 hr, 600 rpm, 28 G

### (First step)

Li₂S and carbon nanofiber (CNF) were mixed at a weight ratio of 30:10. The mixture was mechanically milled using a ball mill to prepare a Li₂S-CNF composite. Milling conditions were 25 °C, 600 rpm for 10 hours. The milling energy applied to the sample during milling was 28 G.

### (Second step)

The Li₂S-CNF composite and LiI were mixed at a weight ratio of 40:20. The mixture was mechanically milled using a ball mill to prepare a Li₂S-CNF-Lil composite. Milling conditions were 25 °C, 600 rpm for 10 hours. The milling energy applied to the sample during milling was 28 G. The Li2S-CNF-LiI composite was used as a composite cathode active material.

### Comparative Example 9: Li₂S-SE-CNF, 2 steps, 10 hr + 10 hr, 600 rpm, 28 G

### (First step)

Li₂S and Li₆PS₅Cl solid electrolyte (SE) were mixed at a weight ratio of 30:20. The mixture was mechanically milled using a ball mill to prepare a Li₂S-SE composite. Milling conditions were 25 °C, 600 rpm for 10 hours. The milling energy applied to the sample during milling was 28 G.

### (Second step)

The Li₂S-SE composite and CNF were mixed at a weight ratio of 50:10. The mixture was mechanically milled using a ball mill to prepare a Li₂S-SE-CNF composite. Milling conditions were 25 °C, 600 rpm for 10 hours. The milling energy applied to the sample during milling was 28 G. The Li₂S-SE-CNF composite was used as a composite cathode active material.

### Comparative Example 10: Li₂S-Lil-CNF, 1 step, 2 hr, 600 rpm, 28 G

Li₂S, LiI, and carbon nanofiber (CNF) were mixed at a weight ratio of 30:20:10.

The mixture was mechanically milled using a ball mill to prepare a Li₂S-LiI-CNF composite. Milling conditions were 25 °C, 600 rpm for 2 hours. The milling energy applied to the sample during milling was 28 G. The Li₂S-Lil-CNF composite was used as a composite cathode active material.

### (Manufacturing of cathode and secondary battery)

### Example 5

### (Manufacturing of cathode)

The Li₂S-LiI-CNF composite prepared in Example 1 was prepared as a cathode active material. Li₆PS₅Cl, an argyrodite-type crystal (D50=3.0 µm, crystalline), was prepared as a solid electrolyte. PTFE was prepared as a binder. These materials were physically mixed at a weight ratio of composite cathode active material: solid electrolyte: binder = 60: 39: 1 to prepare a cathode mixture. The cathode mixture was obtained by dry mixing using a ball mill.

The cathode mixture was disposed on one surface of a cathode current collector made of carbon-coated aluminum foil on one surface thereof, and plate pressing was performed by a pressure of 200 MPa for 10 minutes to manufacture a cathode. The thickness of the cathode was about 120 µm. The thickness of the cathode active material layer was about 100 µm, and the thickness of the carbon-coated aluminum foil was about 20 µm. The area of the cathode active material layer was equal to the area of the cathode current collector.

### (Manufacturing of anode)

A SUS foil having a thickness of 10 µm was prepared as an anode current collector. Carbon black (CB) having a primary particle diameter of about 30 nm and silver (Ag) particles having an average particle diameter of about 60 nm were prepared as an anode active material.

4 g of a mixed powder containing CB and Ag particles at a weight ratio of 3:1 was put into a container, and 4 g of an NMP solution containing 7 wt% of PVDF binder (#9300 from Kureha Co., Ltd.) was added thereto to prepare a mixed solution. A slurry was prepared by adding NMP dropwise to the prepared mixed solution and stirring the mixed solution. The prepared slurry was applied onto a SUS sheet using a bar coater, dried in air at 80 °C for 10 minutes, and then vacuum-dried at 40 °C for 10 hours to prepare a laminate. The prepared laminate was cold-roll-pressed to flatten the surface thereof to prepare an anode having a first anode active material layer/anode current collector structure. The thickness of the first anode active material layer was about 15 µm. The area of the first anode active material layer was equal to the area of the anode current collector.

### (Manufacturing of solid electrolyte layer)

1.5 parts by weight of an acrylic binder was added to 98.5 parts by weight of a solid electrolyte, Li₆PS₅Cl, which is an argyrodite-type crystal (D₅₀=3.0 µm, crystalline), to prepare a mixture. A slurry was prepared by adding octyl acetate to the prepared mixture and stirring the mixture. The prepared slurry was applied using a bar coater onto a 15 µm thick nonwoven fabric placed on a 75 µm thick PET substrate, and dried in air at 80 °C for 10 minutes to prepare a laminate. The prepared laminate was vacuum-dried at 80 °C for 2 hours to manufacture a solid electrolyte layer.

### (Inactive member)

A flame-retardant inactive member was manufactured by forming a slurry containing pulp fiber (cellulose fiber), glass fiber, aluminum hydroxide (Al(OH)₃), an acrylic binder, and a solvent into a gasket shape and then removing the solvent.

The weight ratio of pulp fiber (cellulose fiber), glass fiber, aluminum hydroxide (Al(OH)₃), and acrylic binder was 20:8:70:2. The thickness of the inactive member was 120 µm.

Before placing the manufactured flame-retardant inactive member on a solid electrolyte layer, moisture, or the like was removed from the flame-retardant inactive member by vacuum heat treatment at 80 °C for 5 hours.

### (Manufacturing of all-solid-state secondary battery)

Referring to FIG. 3, a solid electrolyte layer was disposed on an anode so that a first anode active material layer was in contact with the solid electrolyte layer, and a cathode was disposed on the solid electrolyte layer. A gasket surrounding the cathode and in contact with the solid electrolyte layer was disposed around the cathode to prepare a laminate. The thickness of the gasket was about 120 µm. The above-described flame retardant inactive member was used as the gasket. The gasket is disposed so as to be in contact with the side of the cathode and the solid electrolyte layer. The cathode is disposed at the center of the solid electrolyte layer, and the gasket surrounds the cathode and extends to the end of the solid electrolyte layer. The area of the cathode was about 90% of the area of the solid electrolyte layer, and the gasket was disposed over the entire remaining 10% area of the solid electrolyte layer where the cathode was not disposed.

The prepared laminate was plate-pressed by a pressure of 500 MPa at 85 °C for 30 min. By this pressing treatment, the solid electrolyte layer is sintered, thereby improving battery characteristics. The thickness of the sintered solid electrolyte layer was about 45 µm. The density of the Li₆PS₅Cl solid electrolyte, which is an argyrodite-type crystal, included in the sintered solid electrolyte layer, was 1.6 g/cc. The area of the solid electrolyte layer was equal to the area of the anode.

The pressed laminate was disposed in a pouch and sealed in vacuum to manufacture an all-solid-state secondary battery. A portion of the cathode current collector and a portion of the anode current collector were extended outside the sealed battery, and were used as a cathode terminal and an anode terminal.

### Examples 6 to 8

Cathode and all-solid-state secondary batteries were manufactured in the same manner as in Example 5, except that the composite cathode active materials prepared in Examples 2 to 5 were each used.

### Comparative Examples 11 to 20

Cathode and all-solid-state secondary batteries were manufactured in the same manner as in Example 5, except that the composite cathode active materials prepared in Comparative Examples 1 to 10 were each used.

### Evaluation Example 1: XRD analysis and scanning electron microscopy analysis

XRD spectra were measured using Cu Kα radiation for the raw material (bare) Li₂S used in Example 1, pulverized Li₂S, the Li₂S-LiI composite prepared in the first step of Example 1, and the Li₂S-LiI-CNF composite prepared in Example 1.

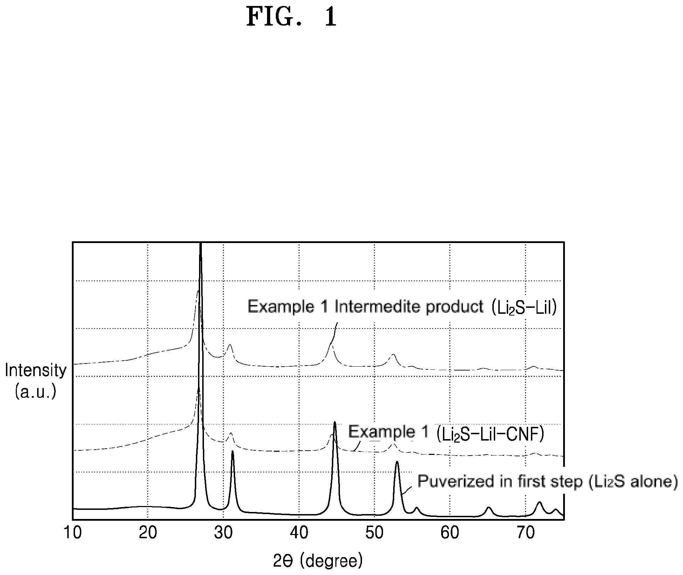

The measurement results are shown in Table 1 below and FIG. 1. The Li₂S crystallite size and lattice constant were derived from the first peak for the (111) crystal plane appearing at a diffraction angle of 2θ = 27°± 2.0° in the XRD spectra.

The pulverized Li₂S was prepared by milling under the same conditions, except that in the first step of Example 1, the mixture of Li₂S and LiI with a weight ratio of 30: 20 was changed to 50 parts by weight of Li₂S. The second step was not performed.

For the raw material (bare) Li₂S used in Example 1, pulverized Li₂S, and the Li₂S-LiI composite prepared in the first step of Example 1, the particle size (i.e., D50 particle size) of the composite was measured using a laser particle size analyzer (PSA).

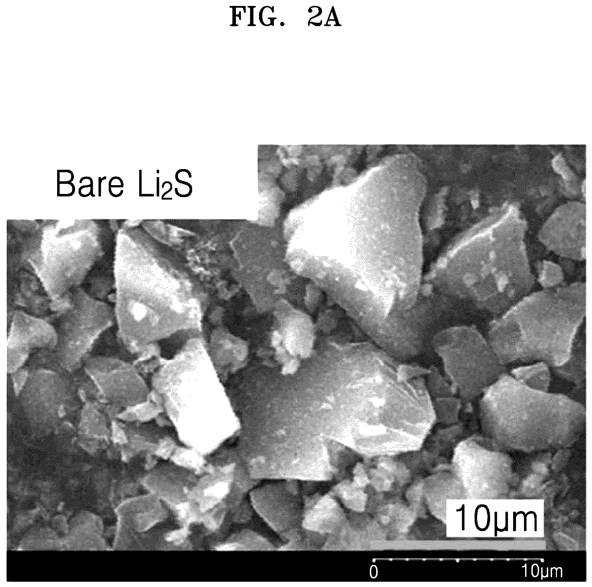

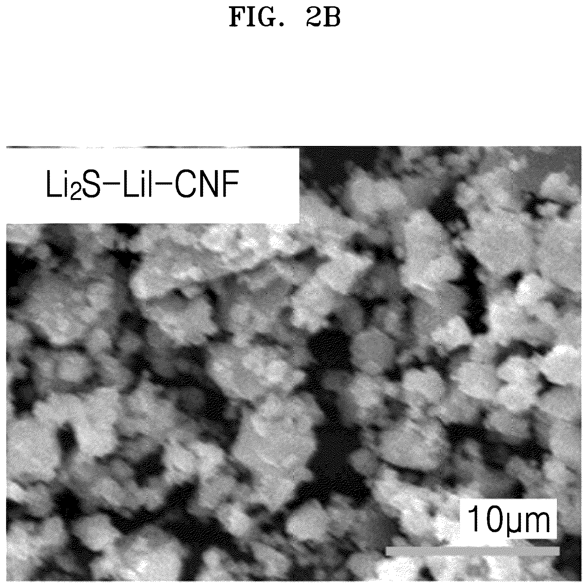

Scanning electron microscope images of the raw material (bare) Li₂S used in Example 1 and the Li₂S-LiI-CNF composite prepared in Example 1 are shown in FIGS. 2A and 2B, respectively.

The size of Li₂S particles in the Li₂S-LiI-CNF composite prepared in Example 1 was measured using a scanning electron microscope. The measurement results are shown in Table 1 below and FIGS. 2A and 2B.

**[Table 1]**

| | Second peak position [°] | Li₂S crystallite size [nm] | Li₂S particle size [µm] |
|---|---|---|---|
| bare Li₂S | 27.0 | 64.7 | 8 |

| | First peak position [°] | Li₂S crystallite size [nm] | Li₂S particle size [µm] |
|---|---|---|---|
| Pulverized Li₂S | 26.9 | 15.4 | - |
| Li₂S-LiI composite (first step) | 26.6 | 8.8 | less than 1 |
| Example 1 (Li₂S-LiI-CNF composite) | 26.7 | 9.9 | less than 1 |

As shown in Table 1, the position of the first peak of the Li₂S-LiI-CNF composite of Example 1 for the (111) crystal plane appearing at a diffraction angle of 2θ = 27°±2.0° shifted to a lower angle compared to the position of the second peak of bare Li₂S for the (111) crystal plane appearing at a diffraction angle 2θ = 27°±2.0°.

The first diffraction angle of the first peak of the Li₂S-LiI-CNF composite of Example 1 was smaller than the second diffraction angle of the second peak of bare Li₂S. Accordingly, the crystallite size of the Li₂S-LiI-CNF composite of Example 1 was significantly reduced compared to the crystallite size of bare Li₂S.

As shown in Table 1 and FIG. 1, the position of the first peak of the Li₂S-LiI-CNF composite of Example 1 and the position of the first peak of the Li₂S-LiI composite, which is an intermediate product in the first step of Example 1, shifted to a lower angle compared to the position of the first peak of the pulverized Li₂S.

Although not shown in Table 1, the first lattice constant (d1) derived from the first peak for the (111) crystal plane at a diffraction angle of 2θ = 27° ± 2.0° of the Li₂S-LiI-CNF composite of Example 1 was greater than the second lattice constant (d2) derived from the second peak for the (111) crystal plane at a diffraction angle 2θ = 27° ± 2.0° of bare Li₂S. The first lattice constant (d1) was 5.78 Å or more. It was determined that the lattice constant value increased because LiI was dissolved within the Li₂S crystal. It was confirmed that the Li₂S-LiI-CNF composite forms a solid solution.

Although not shown in Table 1, the first peak of the Li₂S-LiI-CNF composite had a first full width at half maximum (FWHM1), the second peak of bare Li₂S had a second full width at half maximum (FWHM2), and the first full width at half maximum was larger than the second full width at half maximum. The first full width at half maximum (FWHM1) was 1° or more.

### Evaluation Example 2: Composite particle size analysis

For the composites prepared in Examples 1 to 4 and Comparative Examples 1 to 10, the particle size of each of the composites (i.e., D50 particle size, D10 particle size) was measured using a laser particle size analyzer (PSA).

The D50 particle size of each of the composites prepared in Examples 1 to 4 was about 5 µm, and the D10 particle size thereof was about 1 µm or more.

The D50 particle size of the composite prepared in Comparative Example 1 was about 9 µm, and the D10 particle size thereof was about 1 µm or more.

The D50 particle size of the composite prepared in Comparative Example 2 was less than 3 µm, and the D10 particle size thereof was less than 1 µm.

### Evaluation Example 3: XRD analysis and scanning electron microscopy analysis

For the composite cathode active materials (i.e., composites) prepared in Examples 1 to 4 and Comparative Examples 1 to 10, XRD spectra were measured using Cu Kα radiation

Some of the Li₂S crystallite sizes calculated from the first peak for the (111) crystal plane appearing at a diffraction angle of 2θ = 27° ± 2.0° in the measured XRD spectra is shown in Table 2 below. The size of crystallites was calculated using the Sherrer Equation.

For the composite cathode active materials prepared in Examples 1 to 4 and Comparative Examples 1 to 10, the Li₂S particle size of the composite cathode active material was measured using a scanning electron microscope. The Li₂S particle size of the composite cathode active material is an arithmetic mean value of the particle sizes of multiple Li₂S particles measured using software from scanning electron microscope images. Some of the measurement results are shown in Table 2 below.

**[Table 2]**

| | Milling in first step | Miling in second step | Solid soluton formation | Li₂S crystallite size [nm] | Li₂S particle size [µm] |
|---|---|---|---|---|---|
| Example 1 (28 G, 6 hr) (Li₂S-LiI-CNF composite) | 600 rpm, 28 G, 10 hr | 600 rpm, 28 G, 6 hr | ○ | 8.9 | less than 1 |
| Example 2 (28 G, 3 hr) (Li₂S-LiI-CNF composite) | 600 rpm,28 G, 10 hr | 600 rpm, 28 G, 3 hr | ○ | 9.1 | less than 1 |
| Comparative Example 1 (28 G, 1 hr) (Li₂S-LiI-CNF composite) | 600 rpm,28 G, 10 hr | 600 rpm, 28 G, 1 hr | ○ | 9.6 | less than 1 |
| Comparative Example 2 (28 G, 10 hr) (Li₂S-LiI-CNF composite) | 600 rpm,28 G, 10 hr | 600 rpm, 28 G, 10 hr | △ | 9.8 | less than 1 |
| Comparative Example 3 (Li₂S-LiI-CNF composite) | 510 rpm,20 G, 10 hr | 510 rpm, 20 G, 10 hr | ○ | 9.9 | less than 1 |
| Comparative Example 4 (7 G, 10 hr) (Li₂S-LiI-CNF composite) | 300 rpm,7 G, 10 hr | 300 rpm, 7 G, 10 hr | × | 27.2 | 3 |
| Comparative Example 5 (38G, 10 hr) (Li₂S-LiI-CNF composite) | 700 rpm,38 G, 10 hr | 700 rpm, 38 G, 10 hr | Δ | 15.6 | 2 |
| Comparative Example 6 (0 G) (Li₂S + CNF simple mixture) | - | - | × | 66.67 | 8 |
| Comparative Example 7 (28 G, 2 hr) (Li₂S-CNF composite) | 600 rpm,28 G, 2 hr | - | × | 24.07 | 3 |
| Comparative Example 8 (28 G, 10 hr) (Li₂S-CNF-LiI composite) | 600 rpm,28 G, 10 hr | 600 rpm, 28 G, 10 hr | × | 15.2 | 2 |
| Comparative Example 9 (28 G, 10 hr) (Li₂S-SE-CNF composite | 600 rpm,28 G, 10 hr | 600 rpm, 28 G, 10 hr | × | 8.9 | less than 1 |
| Comparative Example 10 (28 G, 2 hr) (Li₂S-LiI-CNF composite) | 600 rpm,28 G, 2 hr | - | ○ | 22 | 3 |

As shown in Table 2, in the Li₂S-LiI-CNF composites of Examples 1 and 2, a Li₂S-LiI solid solution was formed, the size of the Li₂S crystallites is 9.5 nm or less, and the size of the Li₂S particles of the composite is 2 µm or less.

Although not shown in Table 2, in the Li₂S-LiI-CNF composites of Examples 3 and 4, a Li₂S-LiI solid solution was also formed, the size of the Li₂S crystallites is 9.5 nm or less, and the size of the Li₂S particles of the composite is 2 µm or less.

In the Li₂S-LiI-CNF composite of Comparative Example 1, the size of the Li₂S crystallites was 9.5 nm or more as milling energy decreased during preparation.

In the Li₂S-LiI-CNF composite of Comparative Example 2, as the milling energy increased during preparation, LiI phase-separated into a separate phase and failed to form a solid solution, and the size of the Li₂S crystallites also increased.

In the Li₂S-LiI-CNF composite of Comparative Example 4, a Li2S-LiI solid solution was not formed because the milling energy was excessively reduced during preparation.

In the Li₂S-LiI-CNF composite of Comparative Example 5, a Li₂S-LiI solid solution was not properly formed due to the heat generated by the increased milling energy during preparation.

In the simple mixture of Li₂S and CNF of Comparative Example 6, the Li₂S-CNF composite of Comparative Example 7, and the Li₂S-SE-LiI composite of Comparative Example 9, a solid solution was not formed

In the Li₂S-CNF-LiI composite of Comparative Example 8, a Li₂S-LiI solid solution was not properly formed because the Li₂S-CNF composite was prepared in the first step and then the Li₂S-CNF-LiI composite was prepared in the second step.

Since the Li₂S-LiI-CNF composite of Comparative Example 10 is prepared in the first step, a Li₂S-LiI solid solution was formed, but the Li₂S crystallite size increased, and the Li₂S particle size of the composite exceeded 2 µm.

Evaluation Example 4: Measurement of Ionic conductivity and electronic Conductivity

For the composites prepared in Examples 1 to 4 and Comparative Examples 1 to 10, ionic conductivity and electronic conductivity were measured Pellet was prepared using the composites prepared in Examples 1 to 4 and Comparative Examples 1 to 10.

A symmetrical cell was prepared by placing stainless steel current collectors on both sides of the pellet. The electronic conductivity at 45 °C and 1 atm was measured using a DC polarization method.

A symmetric cell was prepared by placing the solid electrolyte layers prepared in Example 5 on both sides of the pellet and then placing a stainless steel current collector on the solid electrolyte layer. The ionic conductivity at 45 °C and 1 atm was measured using a DC polarization method. Some of the measurement results are shown in Table 3 below.

**[Table 3]**

| | Milling in first step | Milling in second step | Ionic conductivity [mS/cm] | Electronic conductivity [mS/cm] |
|---|---|---|---|---|
| Example 1 (28 G, 6 hr) (Li₂S-LiI-CNF composite) | 600 rpm, 28 G, 10 hr | 600 rpm, 28 G, 6 hr | 0.43 | 1.38 |
| Example 2 (28 G, 3 hr) (Li₂S-LiI-CNF composite) | 600 rpm, 28 G, 10 hr | 600 rpm, 28 G, 3 hr | 0.30 | 2.89 |
| Example 3 (28 G, 2 hr) (Li₂S-LiI-CNF composite) | 600 rpm, 28 G, 10 hr | 600 rpm, 28 G, 2 hr | 0.29 | 2.01 |
| Example 4 (28 G, 8 hr) (Li₂S-LiI-CNF composite) | 600 rpm, 28 G, 10 hr | 600 rpm, 28 G, 8 hr | 0.35 | 1.42 |
| Comparative Example 1 (28 G, 1 hr) (Li₂S-LiI-CNF composite) | 600 rpm, 28 G, 10 hr | 600 rpm, 28 G, 1 hr | 0.25 | 1.09 |
| Comparative Example 2 (28 G, 10 hr) (Li₂S-LiI-CNF composite) | 600 rpm, 28 G, 10 hr | 600 rpm, 28 G, 10 hr | 0.29 | 1.03 |
| Comparative Example 3 (20G, 10 hr) (Li₂S-LiI-CNF composite) | 510 rpm, 20 G, 10 hr | 510 rpm, 20 G, 10 hr | 0.28 | 1.15 |

As shown in Table 3, the composites of Examples 1 to 4 showed improved ionic conductivity and electronic conductivity compared to the composites of Comparative Examples 1 to 3.

### Evaluation Example 4: Measurement of pellet density

For the composite cathode active materials prepared in Examples 1 to 4 and Comparative Examples 1 to 10, pellet density was measured using CARVER 4350L.

After measuring the initial height of a pressure mold, a preset amount of composite cathode active material samples prepared in Examples 1 to 4 and Comparative Examples 1 to 10 was introduced, and after maintaining a constant pressure for 30 seconds, the height of the pressure mold was measured.

The pellet density was calculated from Equation 1 below. Some of the measurement results are shown in Table 4 below. <Equation 1> 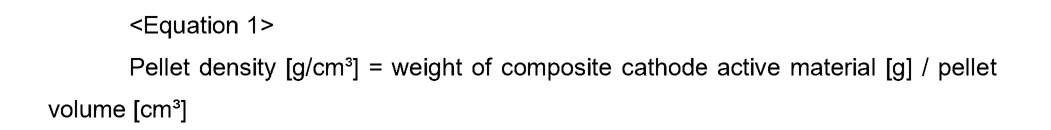 Pellet density [g/cm3] = weight of composite cathode active material [g] / pellet volume [cm3]

### Evaluation Example 5: Charge-discharge test

The charge-discharge characteristics of the all-solid-state secondary batteries of Examples 5 to 8 and Comparative Examples 11 to 20, employing the composite cathode active materials prepared in Examples 1 to 4 and Comparative Examples 1 to 10, were evaluated by the following charge-discharge test.

A charge-discharge test was performed by putting the all-solid-state secondary battery into a constant temperature chamber at 45°C.

In the first cycle, the all-solid-state secondary battery was charged with a constant current of 0.1 C for 12.5 hours until a battery voltage reached 2.5 V to 2.8 V. Subsequently, the all-solid-state secondary battery was discharged with a constant current of 0.05 C for 12.5 hours until the battery voltage reached 0.3 V.

The discharge capacity in the first cycle was taken as standard capacity. The standard capacity is expressed as specific capacity of Li₂S in Table 4 below.

After the second cycle, the all-solid-state secondary battery was charged and discharged up to 30 cycles under the same conditions as the first cycle. The measurement results are shown in Table 4 below. Initial efficiency is expressed by Equation 2 below, and capacity retention rate is expressed by Equation 3 below. <Equation 2> 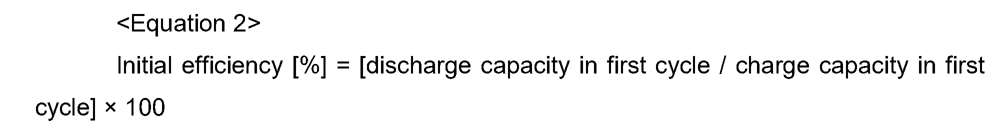 Initial efficiency [%] = [discharge capacity in first cycle / charge capacity in first cycle] × 100 <Equation 3> 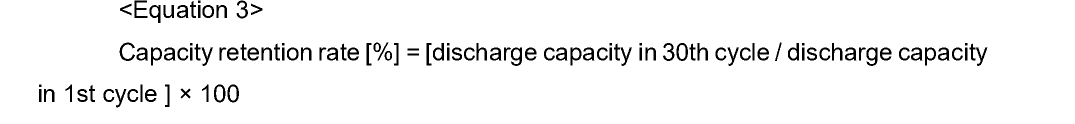 Capacity retention rate [%] = [discharge capacity in 30th cycle / discharge capacity in 1st cycle ] × 100

**[Table 4]**

| | Milling in first step | Milling in second step | Pellet density [g/cm³] | Specific capacity [mAh/g] | Initial efficiency [%] | Capacity retention rate [%] |
|---|---|---|---|---|---|---|
| Example 1 (28 G, 6 hr) (Li₂S-LiI-CNF composite) | 600 rpm, 28 G, 10 hr | 600 rpm, 28 G, 6 hr | 1.67 | 841 | 82.5 | 84 |
| Example 2 (28 G, 3 hr) (Li₂S-LiI-CNF composite) | 600 rpm,28 G, 10 hr | 600 rpm, 28 G, 3 hr | 1.70 | 840 | 83.4 | 90 |
| Example 3 (28 G, 2 hr) (Li₂S-LiI-CNF composite) | 600 rpm,28 G, 10 hr | 600 rpm, 28 G, 2 hr | 1.68 | 832 | 81.3 | 81 |
| Example 4 (28 G, 8 hr) (Li₂S-LiI-CNF composite) | 600 rpm,28 G, 10 hr | 600 rpm, 28 G, 8 hr | 1.66 | 821 | 80.7 | 79 |
| Comparative Example 1 (28 G, 1 hr) (Li₂S-LiI-CNF composite) | 600 rpm,28 G, 10 hr | 600 rpm, 28 G, 1 hr | 1.63 | 780 | 77.4 | 53 |
| Comparative Example 2 (28 G, 10 hr) (Li₂S-LiI-CNF composite) | 600 rpm,28 G, 10 hr | 600 rpm, 28 G, 10 hr | 1.61 | 809 | 78.1 | 64 |
| Comparative Example 3 (20G, 10 hr) (Li₂S-LiI-CNF composite) | 510 rpm,20 G, 10 hr | 510 rpm, 20 G, 10 hr | 1.63 | 815 | 80.4 | 78 |

As shown in Table 4, the pellet density of the composite cathode active materials of Examples 1 to 4 was 1.65 g/cm3 or more.

The lithium batteries of Examples 5 to 8 including the composite cathode active materials of Examples 1 to 4 had improved charge-discharge characteristics compared to the lithium batteries of Comparative Examples 11 to 13 including the composite cathode active materials of Comparative Examples 1 to 3.

It was determined that the composite cathode active material of Comparative Example 1 had poor charge/discharge characteristics of the lithium battery because composite formation was insufficient due to an excessive decrease of milling time in the second step.

In the composite cathode active material of Comparative Example 2, the pellet density thereof decreased to 1.61 g/cm3 because the content of fine particles having a particle size of less than 1 µm increased due to an excessive increase of milling time in the second step.

In the composite cathode active material of Comparative Example 2, the carbon-based material was micronized and it was difficult to form a conductive network between the composite particles due to an excessive increase of milling time in the second step. As a result, it was determined that the charge-discharge characteristics of the lithium battery were poor due to an increase in internal resistance of the lithium battery including the composite cathode active material of Comparative Example 2.

Although not shown in the drawings, it was confirmed that a lithium metal layer, which is a second anode active material, was formed between the first anode active material layer and the anode current collector after initial charging in the all-solid-state secondary batteries of Examples 5 to 8. This was confirmed through a cross-sectional scanning electron microscope image of the all-solid-state secondary battery.

### List of Reference Numerals for Major Elements

| | | | |
|---|---|---|---|
| 1 | All-solid-state secondary battery | 10 | Cathode |
| 11 | Cathode current collector | 12 | Cathode active material layer |
| 20 | Anode | 21 | Anode current collector |
| 22 | First anode active material layer | 23 | Thin film |
| 24 | Second anode active material layer | 30 | Electrolyte layer |
| 40 | Inactive member | | |

### Industrial Applicability

According to an aspect, it is possible to provide an all-solid-state secondary battery having increased specific capacity and improved cycle characteristics by including a composite cathode active material having reduced crystallite size and improved density.

## Claims

1. A composite cathode active material comprising: a composite of Li₂S, a lithium salt, and a carbon-based material,
wherein a size of Li₂S crystallites obtained from an XRD spectrum of the composite is 9.5 nm or less,
the composite includes a solid solution of Li₂S and a lithium salt, and has a pellet density of 1.65 g/cm³ or more.

2. The composite cathode active material of claim 1, wherein a size of the composite is 1 to 10 µm.

3. The composite cathode active material of claim 1, wherein a D10 particle size of the composite is 1 µm or more.

4. The composite cathode active material of claim 1, wherein an electronic conductivity of the composite at 25 °C and 1 atm is 1.1 mS/cm or more.

5. The composite cathode active material of claim 1, wherein an ionic conductivity of the composite at 25 °C and 1 atm is 0.3 mS/cm or more.

6. The composite cathode active material of claim 1, wherein a molar ratio of Li₂S to a lithium salt in the composite is 50:50 to 95:5.

7. The composite cathode active material of claim 1, wherein the carbon-based material is amorphous,
the carbon-based material includes a fibrous carbon-based material,
the fibrous carbon-based material includes a carbon nanostructure, the carbon nanostructure includes carbon nanofibers, carbon nanotubes, carbon nanobelts, carbon nanorods, or a combination thereof, and
a content of the carbon-based material is 1 to 20 wt% of a total weight of the composite.

8. The composite cathode active material of claim 1, wherein the composite includes 10 to 80 parts by weight of Li₂S, 1 to 40 parts by weight of a lithium salt, and 1 to 20 parts by weight of a carbon-based material, based on 100 parts by weight of the composite.

9. The composite cathode active material of claim 1, wherein Mohs hardness of the lithium salt and the carbon-based material is greater than Mohs hardness of the Li₂S, and
each of the lithium salt and the carbon-based material has a Mohs hardness of 0.7 or more.

10. The composite cathode active material of claim 1, wherein a first lattice constant (d1) derived from a first peak appearing at a diffraction angle of 2θ = 27° ± 2.0° corresponding to a (111) crystal plane of Li₂S in the XRD spectrum of the composite is greater than a second lattice constant (d2) derived from a second peak appearing at a diffraction angle of 2θ = 27° ± 2.0° corresponding to the (111) crystal plane of Li₂S in an XRD spectrum of Li₂S used to prepare the composite, and
the first lattice constant (d1) is 5.78 Å or more

11. The composite cathode active material of claim 1, wherein the first peak has a first diffraction angle, the second peak has a second diffraction angle, and the first diffraction angle is smaller than the second diffraction angle, or
the first peak has a first full width at half maximum (FWHM1), the second peak has a second full width at half maximum (FWHM2), and the first full width at half maximum is larger than the second full width at half maximum, and
the first full width at half maximum is 1° or more.

12. A cathode comprising: a cathode current collector; and a cathode active material layer disposed on one side or both sides of the cathode current collector,
wherein the cathode active material layer includes the composite cathode active material of any of claims 1 to 11 and a solid electrolyte.

13. The cathode of claim 12, wherein the cathode active material layer further includes a carbon-based conductive material,
the carbon-based conductive material includes a fibrous carbon-based material,
the fibrous carbon-based material includes a fibrous carbon nanostructure, and
the fibrous carbon nanostructure includes carbon nanofibers, carbon nanotubes, carbon nanobelts, carbon nanorods, or a combination thereof.

14. An all-solid-state secondary battery comprising: the cathode of claim 12; an anode; and an electrolyte layer disposed between the cathode and the anode,
wherein the anode includes an anode current collector and a first anode active material layer on the anode current collector.

15. The all-solid-state secondary battery of claim 14, wherein the first anode active material layer includes an anode active material and a binder,
the anode active material has a particle shape, and an average particle size of the anode active material is 4 µm or less.

16. The all-solid-state secondary battery of claim 15, wherein the anode active material includes at least one selected from carbon-based anode active materials and metal or metalloid anode active materials,
the carbon-based anode active material includes amorphous carbon, crystalline carbon, porous carbon, or a combination thereof, and
the metal or metalloid anode active materials includes gold (Au), platinum (Pt), palladium (Pd), silicon (Si), silver (Ag), aluminum (Al), bismuth (Bi), tin (Sn), zinc (Zn), or a combination thereof.

17. The all-solid-state secondary battery of claim 15, wherein the anode active material includes a mixture of first particles made of amorphous carbon and second particles made of a metal or metalloid,
a content of the second particles is 1 to 60 wt% based on a total weight of the mixture.

18. The all-solid-state secondary battery of claim 14, wherein the anode further includes a second anode active material layer disposed between the anode current collector and/or the first anode active material layer and between the anode current collector and the electrolyte layer, and
the second anode active material layer is a metal layer, and the metal layer includes lithium or a lithium alloy.

19. The all-solid-state secondary battery of claim 14, wherein the electrolyte layer includes a solid electrolyte, a gel electrolyte, or a combination thereof, the solid electrolyte includes a sulfide-based solid electrolyte, an oxide-based solid electrolyte, a polymer solid electrolyte, or a combination thereof,
the gel electrolyte includes a polymer gel electrolyte.
the sulfide-based solid electrolyte is at least one selected from Li₂S-P₂S₅, Li₂S-P₂S₅-LiX (X is a halogen element), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (m and n are each a positive number, and Z is one of Ge, Zn, and Ga), Li₂S-GeS₂, Li₂S-SiS₂-Li₃PO₄, Li₂S-SiS₂-LiₚMO_{q} (p and q are each a positive number, and M is one of P, Si, Ge, B, Al, Ga, and In), Li₇₋ₓPS₆₋ₓClₓ (0≤x≤2), Li₇₋ₓPS₆₋ₓBrₓ (0≤x≤2), and Li₇₋ₓPS₆₋ₓIₓ (0≤x≤2),
the sulfide-based solid electrolyte includes an argyrodite-type solid electrolyte,
the argyrodite-type solid electrolyte includes at least one selected from Li₆PS₅Cl, Li₆PS₅Br, and Li₆PS₅I, and
the argyrodite-type solid electrolyte has a density of 1.5 to 2.0 g/cc.

20. The all-solid-state secondary battery of claim 14, wherein the cathode includes a cathode current collector,
at least one of the cathode current collector and the anode current collector includes a base film and a metal layer disposed on one side or both sides of the base film,
the base film includes a polymer, the polymer includes polyethylene terephthalate (PET), polyethylene (PE), polypropylene (PP), polybutylene terephthalate (PBT), polyimide (PI), or a combination thereof,
the metal layer includes indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof, and
the all-solid-state secondary battery further includes an inactive member disposed on one side of the cathode.
